# EUROPEAN PATENT APPLICATION

(11) **EP 4 779 914 A1**
(43) Date of publication of application: **22.07.2026**
(21) Application number: 24870493.4
(22) Date of filing: 14.09.2024
(51) Int. Cl.: H04L 1/1829

(54) **COMMUNICATION METHOD BASED ON PROTOCOL DATA UNIT SET, AND RELATED APPARATUS**

(30) Priority: 26.09.2023 CN 202311257450
(71) Applicant: HUAWEI TECHNOLOGIES CO., LTD., Shenzhen 518129 (CN)
(72) Inventor: ZANG, Xin, Shenzhen, Guangdong 518129 (CN); ZHOU, Yu, Shenzhen, Guangdong 518129 (CN); MA, Jingwang, Shenzhen, Guangdong 518129 (CN); WANG, Yuan, Shenzhen, Guangdong 518129 (CN)
(74) Representative: Körber, Martin Hans
(86) International application number: PCT/CN2024/119005
(87) International publication number: WO 2025/066949

(57) **Abstract**

This application discloses a protocol data unit set-based communication method and a related apparatus. The method includes: An access network device receives first information, where the first information is used to enable the access network device to determine a retransmission mechanism of one or more PDU sets; and the access network device disables retransmission of a part or all of data packets of a first PDU set based on the first information, where the first PDU set belongs to the one or more PDU sets. The access network device determines a retransmission mechanism of a data packet of a PDU set based on an external indication. Retransmission of the part or all of the data packets of the first PDU set is disabled, so that a delay can be reduced, network resource occupation can be reduced, and a data throughput can be improved.

## Description

This application claims priority to Chinese Patent Application No. CN202311257450.4, filed with the China National Intellectual Property Administration on September 26, 2023 and entitled "PROTOCOL DATA UNIT SET-BASED COMMUNICATION METHOD AND RELATED APPARATUS", which is incorporated herein by reference in its entirety.

### TECHNICAL FIELD

This application relates to the field of communication technologies, and in particular, to a protocol data unit set-based communication method and a related apparatus.

### BACKGROUND

With the development of the 5th generation mobile communication (5th generation, 5G) technology, media service businesses increase exponentially. The media service businesses such as high-definition video services and extended reality (extended reality, XR) services, propose high requirements on a network transmission bandwidth and a network transmission delay. Currently, a concept of a protocol data unit (protocol data unit, PDU) set (PDU set) is proposed. The PDU set includes one or more PDUs carrying application layer valid payloads. For example, the application layer valid payloads are video frames or video slices.

In a processing mechanism of the PDU set, an application function (application function, AF) provides PDU set-related flow information (protocol description) and a corresponding quality of service (quality of service, QoS) parameter (QoS parameter) for a 5G system (5G system, 5GS) network element. The 5GS network element performs PDU set-based QoS handling (PDU Set-based QoS handling) based on the PDU set-related information provided by the AF. The AF determines, based on a PDU set-related packet loss status collected by a terminal device, that an application layer enables or disables an error correction mode of a data packet of the PDU set. For example, the error correction mode is forward error correction (forward error correction, FEC) at the application layer. When the FEC is enabled by the AF, an appropriate packet loss during data packet transmission between an access network device and the terminal device may not affect data recovery performed by the terminal device on the data packet.

After the FEC is enabled by the AF, the terminal device detects a data packet loss, and the terminal device sends a packet loss notification of the data packet in a transmission process to the access network device. After receiving the packet loss notification from the terminal device, the access network device triggers retransmission of the lost data packet. However, when the access network device retransmits the data packet, a round-trip time (round-trip time, RTT) delay is referenced, causing a delay increase and affecting communication quality of the terminal device. After the FEC is enabled by the AF, the terminal device can tolerate the appropriate packet loss in the process in which the access network device sends data packets to the terminal device. Therefore, how to reduce the delay becomes an urgent technical problem to be resolved.

### SUMMARY

According to a first aspect, an embodiment of this application proposes a protocol data unit set-based communication method, including:

An access network device receives first information, where the first information is used to enable the access network device to determine a retransmission mechanism of one or more protocol data unit sets PDU SET; and
the access network device disables retransmission of a part or all of data packets of a first PDU set based on the first information, where the first PDU set belongs to the one or more PDU sets.

Optionally, an error correction mode is enabled for a data packet of the first PDU set.

In a possible implementation, the data packet is a protocol data unit (PDU).

In another possible implementation, the data packet is a service data unit (SDU), for example, a service data adaptation protocol (SDAP) SDU, a packet data convergence protocol (PDCP) SDU, a radio link control (RLC) SDU, or a media access control (MAC) SDU. It may be understood that, for a data packet sent from a user plane function (UPF) to the access network device, the data packet may be in a format of a protocol data unit. When the access network device receives the data packet from the SDAP layer, the data packet may change to the SDAP SDU format. When the data packet is transmitted from the SDAP layer to the PDCP layer, the data packet arrives at the PDCP layer and is converted into the PDCP SDU. Similarly, after the data packet arrives at the RLC layer, the data packet is converted into the RLC SDU. After the data packet arrives at the MAC layer, the data packet is converted into the MAC SDU. A data unit of a data packet granularity processed at each layer may be different. It may be understood that the data packet in this embodiment of this application may alternatively be a data unit at another granularity. This is not limited in this embodiment of this application.

In this embodiment of this application, "disabling retransmission of the part or all of the data packets of the first PDU set" may also be referred to as "not enabling retransmission of the part or all of the data packets of the first PDU set", or "not sending the part or all of the data packets of the first PDU set again". This is not limited in this embodiment of this application.

In this embodiment of this application, the access network device determines a retransmission mechanism of a data packet of a PDU set based on an external indication. Retransmission of the part or all of the data packets of the first PDU set is disabled, so that a delay can be reduced, network resource occupation can be reduced, and a data throughput can be improved. In addition, on a premise that the error correction mode is enabled for the part or all of the data packets of the one or more PDU sets, the access network device disables, based on the first information, retransmission of the part or all of the data packets of the first PDU set. On a premise of ensuring data transmission reliability, disabling retransmission of the part or all of the data packets of the first PDU set can reduce a delay and improve a data throughput.

With reference to the first aspect, in a possible implementation of the first aspect, the first information further indicates to enable the error correction mode for the part or all of the data packets of the one or more PDU sets; and further, the method includes: The access network device determines, based on the first information, to enable the error correction mode for the part or all of the data packets of the one or more PDU sets. Based on the first information, the access network device determines that the error correction mode is enabled for the part or all of the data packets of the one or more PDU sets, so that signaling overheads can be reduced, and data reliability can be improved.

With reference to the first aspect, in a possible implementation of the first aspect, the first information includes first indication information, and the first indication information is used to enable the access network device to determine a retransmission mechanism of the one or more PDU sets to be: disabling retransmission of the part or all of the data packets of the first PDU set, which further includes: The access network device enables an unacknowledged mode UM related to the part or all of the data packets of the first PDU set based on the first indication information. Specifically, the access network device enables the UM mode of the part or all of the data packets of the first PDU set based on the first indication information, to disable retransmission of the part or all of the data packets of the first PDU set, to improve implementation flexibility of the solution.

With reference to the first aspect, in a possible implementation of the first aspect, that the access network device enables, based on the first indication information, the unacknowledged mode UM of the part or all of the data packets of the first PDU set includes: The access network device indicates, based on the first indication information, a radio link control RLC layer of the access network device to enable the unacknowledged mode UM related to the part or all of the data packets of the first PDU set.

With reference to the first aspect, in a possible implementation of the first aspect, the first information includes the first indication information, and the first indication information is used to enable the access network device to determine the retransmission mechanism of the one or more PDU sets to be: disabling retransmission of the part or all of the data packets of the one or more PDU sets; and that the access network device disables retransmission of the part or all of the data packets of the first PDU set based on the first information further includes: The access network device disables retransmission of the part or all of the data packets of the first PDU set based on the first indication information. Specifically, the access network device disables automatic repeat request ARQ retransmission of the part or all of the data packets of the first PDU set based on the first indication information. Specifically, the access network device disables ARQ retransmission of the part or all of the data packets of the first PDU set based on the first indication information, to disable retransmission of the part or all of the data packets of the first PDU set, to improve implementation flexibility of the solution.

With reference to the first aspect, in a possible implementation of the first aspect, the method further includes: The access network device notifies, based on the first indication information, a terminal device not to send indication information of an acknowledgment ACK of the data packet of the first PDU set and indication information of a negative acknowledgment NACK of the data packet of the first PDU set. Alternatively, the access network device may further notify the terminal device not to feed back indication information of an ACK or indication information of a NACK of the data packet of the first PDU set, to reduce signaling overheads and increase a data throughput.

With reference to the first aspect, in a possible implementation of the first aspect, the first information includes a first parameter, and the first parameter indicates a maximum number of consecutive lost packets of a data packet of one PDU set; and the first parameter indicates the access network device to determine that the retransmission mechanism of the one or more PDU sets is: determining, based on a maximum number of consecutive lost packets of the one or more PDU sets and the first parameter, to enable or disable retransmission of the part or all of the data packets of the one or more PDU sets. Specifically, the first information may alternatively be the first parameter related to the maximum number of consecutive lost packets of the data packet of the PDU set, to improve implementation flexibility of the solution.

With reference to the first aspect, in a possible implementation of the first aspect, that the access network device disables retransmission of the part or all of the data packets of the first PDU set based on the first information includes: A maximum number of consecutive lost packets of the first PDU set is less than or equal to the first parameter, and the access network device determines, based on the first parameter and the maximum number of consecutive lost packets of the first PDU set, to disable retransmission of the part or all of the data packets of the first PDU set. Specifically, the access network device disables retransmission of the part or all of the data packets of the first PDU set based on the first parameter and the maximum number of consecutive lost packets of the first PDU set, to improve implementation flexibility of the solution.

With reference to the first aspect, in a possible implementation of the first aspect, the first information includes a second parameter, and the second parameter indicates a maximum number of lost packets or a maximum packet loss ratio of a data packet of one PDU set; and the second parameter indicates the access network device to determine that the retransmission mechanism of the one or more PDU sets is: enabling the access network device to determine, based on a maximum number of lost packets or a maximum packet loss ratio of the one or more PDU sets and the second parameter, to enable or disable retransmission of the part or all of the data packets of the one or more PDU sets. Specifically, the first information may alternatively be the second parameter related to the maximum number of lost packets or the maximum packet loss ratio of the data packet of the PDU set, to improve implementation flexibility of the solution.

With reference to the first aspect, in a possible implementation of the first aspect, that the access network device disables retransmission of the part or all of the data packets of the first PDU set based on the first information includes: A maximum number of lost packets or a maximum packet loss ratio of the first PDU set is less than or equal to the second parameter, and the access network device determines, based on the second parameter and the maximum number of lost packets or the maximum packet loss ratio of the first PDU set, to disable retransmission of the part or all of the data packets of the first PDU set. Specifically, the access network device disables retransmission of the part or all of the data packets of the first PDU set based on the second parameter and the maximum number of lost packets or the maximum packet loss ratio of the first PDU set, to improve implementation flexibility of the solution.

With reference to the first aspect, in a possible implementation of the first aspect, the method further includes: The access network device receives a status report of the terminal device, where the status report of the terminal device includes any one or any combination of the following information: a first sequence number of a data packet sent by the access network device, indication information of an acknowledgment ACK of the data packet sent by the access network device, or indication information of a negative acknowledgment NACK of the data packet sent by the access network device. In a possible implementation, the status report of the terminal device may be a status report of an RLC layer, or may be a status report of a MAC layer. The access network device determines a transmission status of the first PDU set based on the status report of the terminal device, where the transmission status of the first PDU set includes an acknowledgment ACK result of a data packet of the first PDU set and/or a negative acknowledgment NACK result of a data packet of the first PDU set; and the access network device determines, based on the transmission status of the first PDU set, one or any combination of the following information: the maximum number of consecutive lost packets of the first PDU set, the maximum number of lost packets of the first PDU set, or the maximum packet loss ratio of the first PDU set determined based on the transmission status of the first PDU set.

With reference to the first aspect, in a possible implementation of the first aspect, that the access network device determines, based on the transmission status of the first PDU set, one or any combination of the following information: the maximum number of consecutive lost packets of the first PDU set, the maximum number of lost packets of the first PDU set, or the maximum packet loss ratio of the first PDU set includes the following content. First, a packet data convergence protocol PDCP layer of the access network device obtains the status report of the terminal device. Specifically, the PDCP layer requests or subscribes to the status report of the terminal device from the RLC layer. The status report of the terminal device may be a status report of a data packet that is not received. For example, the PDCP layer subscribes, from the RLC layer, to a first sequence number of the data packet that is not received, or to a first sequence number of a received data packet. Second, the PDCP layer determines the transmission status of the first PDU set based on the status report of the terminal device, for example, an ACK status or a NACK status of the part or all of the data packets of the first PDU set. In this case, when data packet transmission fails, the RLC layer notifies the PDCP layer of the first sequence number of the corresponding data packet. In a possible implementation, the first sequence number may be a sequence number of a data packet in the status report. Finally, the PDCP layer of the access network device determines, based on the transmission status of the first PDU set of the terminal device, one or any combination of the following information: the maximum number of consecutive lost packets of the first PDU set, the maximum number of lost packets of the first PDU set, or the maximum packet loss ratio of the first PDU set.

According to the foregoing method, the PDCP layer of the access network device determines, based on the transmission status of the first PDU set of the terminal device, the maximum number of consecutive lost packets of the first PDU set, the maximum number of lost packets of the first PDU set, and/or the maximum packet loss ratio of the first PDU set, to improve implementation flexibility of the solution.

With reference to the first aspect, in a possible implementation of the first aspect, that the access network device determines, based on the transmission status of the first PDU set, one or any combination of the following information: the maximum number of consecutive lost packets of the first PDU set, the maximum number of lost packets of the first PDU set, or the maximum packet loss ratio of the first PDU set includes the following content. First, the RLC layer of the access network device obtains the status report of the terminal device. Then, the RLC layer of the access network device determines the transmission status of the first PDU set based on the status report of the terminal device, for example, an ACK or NACK status of the part or all of the data packets of the first PDU set. Finally, the RLC layer of the access network device determines, based on the transmission status of the first PDU set, one or any combination of the following information: the maximum number of consecutive lost packets of the first PDU set, the maximum number of lost packets of the first PDU set, or the maximum packet loss ratio of the first PDU set. According to the foregoing method, the RLC layer of the access network device determines, based on the transmission status of the first PDU set, the maximum number of consecutive lost packets of the first PDU set, the maximum number of lost packets of the first PDU set, and/or the maximum packet loss ratio of the first PDU set, to improve implementation flexibility of the solution.

With reference to the first aspect, in a possible implementation of the first aspect, that the access network device determines to disable retransmission of the part or all of the data packets of the first PDU set includes: The PDCP layer of the access network device obtains the maximum number of consecutive lost packets of the first PDU set; the PDCP layer of the access network device receives the first parameter from the RRC layer of the access network device; and the PDCP layer of the access network device determines to disable retransmission of the part or all of the data packets of the first PDU set based on the maximum number of consecutive lost packets of the first PDU set and the first parameter. Specifically, the PDCP layer of the access network device may determine to disable retransmission of the part or all of the data packets of the first PDU set, to improve implementation flexibility of the solution.

With reference to the first aspect, in a possible implementation of the first aspect, that the access network device determines to disable retransmission of the part or all of the data packets of the first PDU set includes: The RLC layer of the access network device obtains the maximum number of consecutive lost packets of the first PDU set; the RLC layer of the access network device obtains the first parameter; and the RLC layer of the access network device determines, based on the maximum number of consecutive lost packets of the first PDU set and the first parameter, to disable retransmission of the part or all of the data packets of the first PDU set. Specifically, the RLC layer of the access network device may determine to disable retransmission of the part or all of the data packets of the first PDU set, to improve implementation flexibility of the solution.

With reference to the first aspect, in a possible implementation of the first aspect, that the RLC layer of the access network device obtains the first parameter includes: The RLC layer of the access network device obtains the first parameter from the part or all of the data packets of the first PDU set, where a header of the data packet of the first PDU set carries the first parameter; or the RLC layer of the access network device receives the first parameter from the RRC layer of the access network device. Specifically, the RLC layer may obtain the first parameter in a plurality of manners, to improve implementation flexibility of the solution.

Further, a PDCP SDU header of the data packet of the first PDU set carries the first parameter.

With reference to the first aspect, in a possible implementation of the first aspect, the RLC layer of the access network obtains PDU set information PDU Set information of the first PDU set from the header of the part or all of the data packets of the first PDU set.

With reference to the first aspect, in a possible implementation of the first aspect, that the access network device determines to disable retransmission of the part or all of the data packets of the first PDU set includes: The PDCP layer of the access network device obtains the maximum number of lost packets or the maximum packet loss ratio of the first PDU set; the PDCP layer of the access network device receives the second parameter; and the PDCP layer of the access network device determines to disable retransmission of the part or all of the data packets of the first PDU set based on the maximum number of lost packets or the maximum packet loss ratio of the first PDU set and the second parameter. Specifically, the PDCP layer of the access network device may determine to disable retransmission of the part or all of the data packets of the first PDU set, to improve implementation flexibility of the solution.

With reference to the first aspect, in a possible implementation of the first aspect, that the access network device determines to disable the retransmission mechanism of the part or all of the data packets of the first PDU set includes: The RLC layer of the access network device obtains the maximum number of lost packets or the maximum packet loss ratio of the first PDU set; the RLC layer of the access network device obtains the second parameter; and the RLC layer of the access network device determines to disable retransmission of the part or all of the data packets of the first PDU set based on the maximum number of lost packets or the maximum packet loss ratio of the first PDU set and the second parameter. Specifically, the RLC layer of the access network device may determine to disable retransmission of the part or all of the data packets of the first PDU set, to improve implementation flexibility of the solution.

With reference to the first aspect, in a possible implementation of the first aspect, that the RLC layer of the access network device obtains the second parameter includes: The RLC layer of the access network device obtains the second parameter from the part or all of the data packets of the first PDU set, where a header of the data packet of the first PDU set carries the second parameter; or the RLC layer of the access network device receives the second parameter from the RRC layer of the access network device. Specifically, the RLC layer may obtain the second parameter in a plurality of manners, to improve implementation flexibility of the solution.

Further, a PDCP SDU header of the data packet of the first PDU set carries the second parameter.

With reference to the first aspect, in a possible implementation of the first aspect, the method further includes: The PDCP layer of the access network device determines an ACK data packet of the first PDU set based on the transmission status of the first PDU set, where the ACK data packet of the first PDU set indicates a data packet that is of the first PDU set and that is successfully received by the terminal device; and the PDCP layer of the access network device determines, based on the ACK data packet of the first PDU set, to release or not to release the data packet of the first PDU set in a buffer of the access network device. According to the foregoing method, a storage space of the access network device is saved while reliable data transmission is ensured.

With reference to the first aspect, in a possible implementation of the first aspect, that the PDCP layer of the access network device determines, based on the ACK data packet of the first PDU set, whether to release the data packet of the first PDU set in the buffer of the access network device includes: When a number of ACK data packets of the first PDU set is greater than a number of successfully transmitted data packets of the first PDU set indicated by the first information, the PDCP layer of the access network device determines to release the part or all of the data packets of the first PDU set in the buffer of the access network device; or when a number of ACK data packets of the first PDU set is less than or equal to a number of successfully transmitted data packets of the first PDU set indicated by the first information, the PDCP layer of the access network device indicates the RLC layer of the access network device to retransmit the part or all of the data packets of the first PDU set to the terminal device.

With reference to the first aspect, in a possible implementation of the first aspect, the method further includes: The access network device obtains a transmission delay requirement of the terminal device. If the transmission delay requirement is less than the PSDB of the first PDU set, the access network device determines, based on the maximum number of consecutive lost packets of the first PDU set and the first parameter, to enable retransmission of the part or all of the data packets of the first PDU set; or if the transmission delay requirement is greater than or equal to the PSDB of the first PDU set, the access network device determines to disable retransmission of the part or all of the data packets of the first PDU set.

Specifically, the access network device obtains a first transmission delay between the access network device and the terminal device; and the access network device detects whether a sum of the first transmission delay and a second transmission delay is less than a packet set delay budget PSDB of the first PDU set. If the sum of the first transmission delay and the second transmission delay is less than the PSDB of the first PDU set, the access network device determines, based on the maximum number of consecutive lost packets of the first PDU set and the first parameter, to enable or disable retransmission of the part or all of the data packets of the first PDU set, where the second transmission delay is a transmission delay between the user plane function and the access network device. If the sum of the first transmission delay and the second transmission delay is greater than the PSDB of the first PDU set, the access network device determines to disable retransmission of the part or all of the data packets of the first PDU set. According to the foregoing method, the access network device does not need to retransmit a data packet of a PDU set whose PSDB times out, to save transmission resources and improve a data throughput.

With reference to the first aspect, in a possible implementation of the first aspect, that the access network device receives the first information includes: The access network device receives the first information from an application function; or the access network device receives the first information from a user plane function, where the first information is carried in the part or all of the data packets of the one or more PDU sets from the user plane function. The access network device may obtain the first information in a plurality of manners, to improve implementation flexibility of the solution.

With reference to the first aspect, in a possible implementation of the first aspect, the first information is carried in a GTP-U packet header of the part or all of the data packets of the one or more PDU sets.

According to a second aspect, an embodiment of this application proposes a protocol data unit set-based communication method, including:

An application function sends first information to an access network device, where the first information is used to enable the access network device to determine a retransmission mechanism of one or more protocol data unit sets PDU SET.

For example, the application function sends the first information to the access network device via signaling or a message.

In this embodiment of this application, the application function may send the first information to the access network device, so that the access network device determines, based on the first information, to disable retransmission of a part or all of data packets of a first PDU set, so that a delay can be reduced, and the first PDU set belongs to the one or more PDU sets.

According to a third aspect, an embodiment of this application proposes a protocol data unit set-based communication method, including:

A user plane function sends first information to an access network device, where the first information is used to enable the access network device to determine a retransmission mechanism of one or more protocol data unit sets PDU SET.

For example, in a process in which the user plane function sends the data packet of the one or more PDU sets to the access network device, the first information is sent in-stream.

In this embodiment of this application, the user plane function may send the first information to the access network device, so that the access network device determines, based on the first information, to disable retransmission of a part or all of data packets of a first PDU set, so that a delay can be reduced, and the first PDU set belongs to the one or more PDU sets.

With reference to the third aspect, in a possible implementation of the third aspect, the first information is carried in a GTP-U packet header of the part or all of the data packets of the one or more PDU sets. The user plane function sends the first information to the access network device in-stream, to improve implementation flexibility of the solution.

With reference to the second aspect or the third aspect, in a possible implementation of the second aspect or the third aspect, the first information further indicates to enable an error correction mode for a part or all of data packets of the one or more PDU sets. This can reduce signaling overheads and improve data reliability.

With reference to the second aspect or the third aspect, in a possible implementation of the second aspect or the third aspect, the first information includes first indication information, and the first indication information is used to enable the access network device to determine that the retransmission mechanism of the one or more PDU sets is: enabling the access network device to enable an unacknowledged mode UM related to the part or all of the data packets of the one or more PDU sets. Specifically, the first indication information is used to enable the access network device to enable the UM mode of the part or all of the data packets of the one or more PDU sets based on the first indication information, to disable retransmission of the part or all of data packets of the one or more PDU sets, to improve implementation flexibility of the solution.

With reference to the second aspect or the third aspect, in a possible implementation of the second aspect or the third aspect, the first information includes first indication information, and the first indication information is used to enable the access network device to determine that the retransmission mechanism of the one or more PDU sets is: enabling the access network device to disable retransmission of the part or all of the data packets of the one or more PDU sets. Specifically, the first indication information further indicates to disable automatic repeat request ARQ retransmission of the part or all of the data packets of the one or more PDU sets. The access network device disables ARQ retransmission of the part or all of the data packets of the one or more PDU sets based on the first indication information, to disable retransmission of the part or all of the data packets of the one or more PDU sets, to improve implementation flexibility of the solution.

With reference to the second aspect or the third aspect, in a possible implementation of the second aspect or the third aspect, the first information includes a first parameter, and the first parameter indicates a maximum number of consecutive lost packets of a data packet of one PDU set; and the first parameter indicates the access network device to determine that the retransmission mechanism of the one or more PDU sets is: enabling the access network device to determine, based on a maximum number of consecutive lost packets of the one or more PDU sets and the first parameter, to enable or disable retransmission of the part or all of the data packets of the one or more PDU sets. Specifically, the first information may alternatively be the first parameter related to the maximum number of consecutive lost packets of the data packet of the PDU set, to improve implementation flexibility of the solution.

With reference to the second aspect or the third aspect, in a possible implementation of the second aspect or the third aspect, that the first parameter indicates the access network device to determine the retransmission mechanism of the one or more PDU sets specifically includes: The first parameter indicates the access network device to determine, based on the maximum number of consecutive lost packets of the one or more PDU sets, to enable or disable retransmission of the part or all of the data packets of the one or more PDU sets. When a maximum number of consecutive lost packets of the first PDU set is less than or equal to the first parameter, the access network device determines to disable retransmission of the part or all of the data packets of the first PDU set; or when a maximum number of consecutive lost packets of the first PDU set is greater than the first parameter, the access network device determines to enable retransmission of the part or all of the data packets of the first PDU set, where the first PDU set belongs to the one or more PDU sets.

With reference to the second aspect or the third aspect, in a possible implementation of the second aspect or the third aspect, that the first parameter indicates the access network device to determine the retransmission mechanism of the one or more PDU sets includes: The first parameter further indicates the access network device to enable an acknowledged mode AM of a data packet of the first PDU set, and the first PDU set belongs to the one or more PDU sets. The access network device is indicated to enable the AM mode of the data packet of the first PDU set, so that the access network device obtains indication information of an ACK or indication information of a NACK of the data packet of the first PDU set, so that the access network device determines to enable or disable retransmission of the part or all of the data packets of the first PDU set.

With reference to the second aspect or the third aspect, in a possible implementation of the second aspect or the third aspect, the first information includes a second parameter, and the second parameter indicates a maximum number of lost packets or a maximum packet loss ratio of a data packet of one PDU set; and the second parameter indicates the access network device to determine that the retransmission mechanism of the one or more PDU sets is: enabling the access network device to determine, based on a maximum number of lost packets or a maximum packet loss ratio of the one or more PDU sets and the second parameter, to enable or disable retransmission of the part or all of the data packets of the one or more PDU sets. Specifically, the first information may alternatively be the second parameter related to the maximum number of lost packets or the maximum packet loss ratio of the data packet of the PDU set, to improve implementation flexibility of the solution.

With reference to the second aspect or the third aspect, in a possible implementation of the second aspect or the third aspect, that the second parameter indicates the access network device to determine the retransmission mechanism of the one or more PDU sets includes: The second parameter indicates the access network device to determine, based on the maximum number of lost packets or the maximum packet loss ratio of the one or more PDU sets, to enable or disable retransmission of the part or all of the data packets of the one or more PDU sets. When a maximum number of lost packets or a maximum packet loss ratio of the first PDU set is less than or equal to the second parameter, the access network device determines to disable retransmission of the part or all of the data packets of the first PDU set; or when a maximum number of lost packets or a maximum packet loss ratio of the first PDU set is greater than the second parameter, the access network device determines to enable retransmission of the part or all of the data packets of the first PDU set, where the first PDU set belongs to the one or more PDU sets.

With reference to the second aspect or the third aspect, in a possible implementation of the second aspect or the third aspect, that the second parameter indicates the access network device to determine the retransmission mechanism of the one or more PDU sets includes: The second parameter further indicates the access network device to enable an acknowledged mode AM related to a data packet of the first PDU set, and the first PDU set belongs to the one or more PDU sets. The access network device is indicated to enable the AM mode of the data packet of the first PDU set, so that the access network device obtains indication information of an ACK or indication information of a NACK of the data packet of the first PDU set, so that the access network device determines to enable or disable retransmission of the part or all of the data packets of the first PDU set.

With reference to the second aspect or the third aspect, in a possible implementation of the second aspect or the third aspect, the first information is carried in a QoS parameter of a first quality of service QoS flow, and the first QoS flow is used to transmit the one or more PDU sets.

With reference to the second aspect or the third aspect, in a possible implementation of the second aspect or the third aspect, the error correction mode includes a forward error correction FEC mode.

With reference to the second aspect or the third aspect, in a possible implementation of the second aspect or the third aspect, the second parameter is forward error correction content ratio FEC content ratio information.

According to a fourth aspect, an embodiment of this application provides a communication apparatus, where the communication apparatus is used in an access network device, and the communication apparatus includes:
a transceiver module, configured to receive first information, where the first information is used to enable the access network device to determine a retransmission mechanism of one or more protocol data unit sets PDU SET; and
a processing module, configured to disable retransmission of a part or all of data packets of a first PDU set based on the first information, where the first PDU set belongs to the one or more PDU sets.

Optionally, the first information further indicates to enable an error correction mode for a part or all of data packets of the one or more PDU sets.

Optionally, the first information includes first indication information, where
the first indication information is used to enable the access network device to determine that the retransmission mechanism of the one or more PDU sets is: enabling the access network device to enable an unacknowledged mode UM related to the part or all of the data packets of the first PDU set.

Optionally, the first information includes first indication information, where
the first indication information is used to enable the access network device to determine that the retransmission mechanism of the one or more PDU sets is: enabling the access network device to disable retransmission of the part or all of the data packets of the one or more PDU sets.

Optionally, the first information includes a first parameter, and the first parameter indicates a maximum number of consecutive lost packets of a data packet of one PDU set; and
the first parameter indicates the access network device to determine that the retransmission mechanism of the one or more PDU sets is: enabling the access network device to determine, based on a maximum number of consecutive lost packets of the one or more PDU sets and the first parameter, to enable or disable retransmission of the part or all of the data packets of the one or more PDU sets.

Optionally,
a maximum number of consecutive lost packets of the first PDU set is less than or equal to the first parameter, and the access network device determines to disable retransmission of the part or all of the data packets of the first PDU set.

Optionally, the first information includes a second parameter, and the second parameter indicates a maximum number of lost packets or a maximum packet loss ratio of a data packet of one PDU set; and
the second parameter indicates that the retransmission mechanism of the one or more PDU sets is: enabling the access network device to determine, based on a maximum number of lost packets or a maximum packet loss ratio of the one or more PDU sets and the second parameter, to enable or disable retransmission of the part or all of the data packets of the one or more PDU sets.

Optionally,
a maximum number of lost packets or a maximum packet loss ratio of the first PDU set is less than or equal to the second parameter, and the access network device determines, based on the second parameter and the maximum number of lost packets or the maximum packet loss ratio of the first PDU set, to disable retransmission of the part or all of the data packets of the first PDU set.

Optionally,
the transceiver module is further configured to receive a status report of a terminal device, where the status report of the terminal device includes one or any combination of the following information: a first sequence number of a data packet sent by the access network device, indication information of an acknowledgment ACK of the data packet sent by the access network device, or indication information of a negative acknowledgment NACK of the data packet sent by the access network device;
the processing module is further configured to determine a transmission status of the first PDU set based on the status report of the terminal device, where the transmission status of the first PDU set includes an acknowledgment ACK result of a data packet of the first PDU set and/or a negative acknowledgment NACK result of a data packet of the first PDU set; and
the processing module is further configured to determine, based on the transmission status of the first PDU set, one or any combination of the following information: the maximum number of consecutive lost packets of the first PDU set, the maximum number of lost packets of the first PDU set, or the maximum packet loss ratio of the first PDU set.

Optionally,
the transceiver module is further configured to obtain, by a packet data convergence protocol PDCP layer of the access network device, the transmission status of the first PDU set; and
the processing module is further configured to determine, by the PDCP layer of the access network device based on the transmission status of the first PDU set, one or any combination of the following information: the maximum number of consecutive lost packets of the first PDU set, the maximum number of lost packets of the first PDU set, or the maximum packet loss ratio of the first PDU set.

Optionally,
the transceiver module is further configured to obtain, by an RLC layer of the access network device, the transmission status of the first PDU set; and
the processing module is further configured to determine, by the RLC layer of the access network device based on the transmission status of the first PDU set, one or any combination of the following information: the maximum number of consecutive lost packets of the first PDU set, the maximum number of lost packets of the first PDU set, or the maximum packet loss ratio of the first PDU set.

Optionally,
the transceiver module is further configured to obtain, by the PDCP layer of the access network device, the maximum number of consecutive lost packets of the first PDU set;
the transceiver module is further configured to receive, by the PDCP layer of the access network device, the first parameter from an RRC layer of the access network device; and
the processing module is further configured to determine, by the PDCP layer of the access network device based on the maximum number of consecutive lost packets of the first PDU set and the first parameter, to disable retransmission of the part or all of the data packets of the first PDU set.

Optionally,
the transceiver module is further configured to obtain, by the RLC layer of the access network device, the maximum number of consecutive lost packets of the first PDU set;
the transceiver module is further configured to obtain, by the RLC layer of the access network device, the first parameter; and
the processing module is further configured to determine, by the RLC layer of the access network device based on the maximum number of consecutive lost packets of the first PDU set and the first parameter, to disable retransmission of the part or all of the data packets of the first PDU set.

Optionally,
the transceiver module is further configured to obtain, by the RLC layer of the access network device, the first parameter from the part or all of the data packets of the first PDU set, where a header of the part or all of the data packets of the first PDU set carries the first parameter; or
the transceiver module is further configured to receive, by the RLC layer of the access network device, the first parameter from an RRC layer of the access network device.

Optionally,
the transceiver module is further configured to obtain, by the PDCP layer of the access network device, the maximum number of lost packets or the maximum packet loss ratio of the first PDU set;
the transceiver module is further configured to receive, by the PDCP layer of the access network device, the second parameter from an RRC layer of the access network device; and
the processing module is further configured to determine, by the PDCP layer of the access network device based on the maximum number of lost packets or the maximum packet loss ratio of the first PDU set and the second parameter, to disable retransmission of the part or all of the data packets of the first PDU set.

Optionally,
the transceiver module is further configured to obtain, by the RLC layer of the access network device, the maximum number of lost packets or the maximum packet loss ratio of the first PDU set;
the transceiver module is further configured to obtain, by the RLC layer of the access network device, the second parameter; and
the processing module is further configured to determine, by the RLC layer of the access network device based on the maximum number of lost packets or the maximum packet loss ratio of the first PDU set and the second parameter, to disable retransmission of the part or all of the data packets of the first PDU set.

Optionally,
the transceiver module is further configured to obtain, by the RLC layer of the access network device, the second parameter from the part or all of the data packets of the first PDU set, where a header of the part or all of the data packets of the first PDU set carries the second parameter; or
the transceiver module is further configured to receive, by the RLC layer of the access network device, the second parameter from an RRC layer of the access network device.

Optionally,
the processing module is further configured to determine, by the PDCP layer of the access network device, an ACK data packet of the first PDU set based on the status report of the terminal device, where the ACK data packet of the first PDU set indicates a data packet that is of the first PDU set and that is successfully received by the terminal device; and
the processing module is further configured to determine, by the PDCP layer of the access network device based on the ACK data packet of the first PDU set, to release or not to release the part or all of the data packets of the first PDU set in a buffer of the access network device.

Optionally,
the transceiver module is further configured to obtain, by the access network device, a transmission delay requirement of the terminal device; and
the transceiver module is further configured to: if the transmission delay requirement is less than a PSDB of the first PDU set, determine, based on the maximum number of consecutive lost packets of the first PDU set and the first parameter, to enable retransmission of the part or all of the data packets of the first PDU set; or
the transceiver module is further configured to: if the transmission delay requirement is greater than or equal to a PSDB of the first PDU set, determine, to disable retransmission of the part or all of the data packets of the first PDU set.

Optionally,
the transceiver module is further configured to receive the first information from an application function; or
the transceiver module is further configured to receive the first information from a user plane function, where the first information is carried in the part or all of the data packets of the one or more PDU sets from the user plane function.

Optionally,
the transceiver module is further configured to obtain, by the RLC layer of the access network, PDU set information PDU Set information of the first PDU set from a header of the part or all of the data packets of the first PDU set.

According to a fifth aspect, an embodiment of this application provides a communication apparatus, where the communication apparatus is used in an application function, and the communication apparatus includes:
a transceiver module, further configured to send first information to an access network device, where the first information is used to enable the access network device to determine a retransmission mechanism of one or more protocol data unit sets PDU SET.

Optionally, the first information further indicates to enable an error correction mode for a part or all of data packets of the one or more PDU sets.

Optionally, the first information includes first indication information, where
the first indication information is used to enable the retransmission mechanism of the one or more PDU sets to be: enabling the access network device to enable an unacknowledged mode UM related to the part or all of the data packets of the one or more PDU sets.

Optionally, the first information includes first indication information, where
the first indication information is used to enable the retransmission mechanism of the one or more PDU sets to be: enabling the access network device to disable retransmission of the part or all of the data packets of the one or more PDU sets.

Optionally, the first indication information further indicates to disable automatic repeat request ARQ retransmission of the part or all of the data packets of the one or more PDU sets.

Optionally, the first information includes a first parameter, and the first parameter indicates a maximum number of consecutive lost packets of a data packet of one PDU set; and
the first parameter indicates the access network device to determine that the retransmission mechanism of the one or more PDU sets is: enabling the access network device to determine, based on a maximum number of consecutive lost packets of the one or more PDU sets and the first parameter, to enable or disable retransmission of the part or all of the data packets of the one or more PDU sets.

Optionally, that the first parameter indicates the access network device to determine the retransmission mechanism of the one or more PDU sets specifically includes:

The first parameter indicates the access network device to determine, based on the maximum number of consecutive lost packets of the one or more PDU sets, to enable or disable retransmission of the part or all of the data packets of the one or more PDU sets; and
when a maximum number of consecutive lost packets of a first PDU set is less than or equal to the first parameter, the access network device determines to disable retransmission of a part or all of data packets of the first PDU set; or
when a maximum number of consecutive lost packets of a first PDU set is greater than the first parameter, the access network device determines to enable retransmission of a part or all of data packets of the first PDU set, where the first PDU set belongs to the one or more PDU sets.

Optionally, the first parameter further indicates the access network device to enable an acknowledged mode AM of a data packet of the first PDU set, and the first PDU set belongs to the one or more PDU sets.

Optionally, the first information includes a second parameter, and the second parameter indicates a maximum number of lost packets or a maximum packet loss ratio of a data packet of one PDU set; and
the second parameter indicates the access network device to determine that the retransmission mechanism of the one or more PDU sets is: enabling the access network device to determine, based on a maximum number of lost packets or a maximum packet loss ratio of the one or more PDU sets and the second parameter, to enable or disable retransmission of the part or all of the data packets of the one or more PDU sets.

Optionally, the second parameter indicates the access network device to determine that the access network device determines, based on the maximum number of lost packets or the maximum packet loss ratio of the one or more PDU sets, to enable or disable retransmission of the part or all of the data packets of the one or more PDU sets; and
when a maximum number of lost packets or a maximum packet loss ratio of a first PDU set is less than or equal to the second parameter, the access network device determines to disable retransmission of a part or all of data packets of the first PDU set; or
when a maximum number of lost packets or a maximum packet loss ratio of the first PDU set is greater than the second parameter, the access network device determines to enable retransmission of a part or all of data packets of a first PDU set, where the first PDU set belongs to the one or more PDU sets.

Optionally, the second parameter further indicates the access network device to enable an acknowledged mode AM related to a data packet of the first PDU set, and the first PDU set belongs to the one or more PDU sets.

Optionally, the first information is carried in a QoS parameter of a first quality of service QoS flow, and the first QoS flow is used to transmit the one or more PDU sets.

Optionally, the error correction mode includes a forward error correction FEC mode.

Optionally, the second parameter is forward error correction content ratio FEC content ratio information.

According to a sixth aspect, an embodiment of this application provides a communication apparatus, where the communication apparatus is used in a user plane function, and the communication apparatus includes:
a transceiver module, further configured to send first information to an access network device, where the first information is used to enable the access network device to determine a retransmission mechanism of one or more protocol data unit sets PDU SET.

Optionally, the first information is carried in a GTP-U packet header of a part or all of data packets of the one or more PDU sets.

Optionally, the first information further indicates to enable an error correction mode for a part or all of data packets of the one or more PDU sets.

Optionally, the first information includes first indication information, where
the first indication information is used to enable the access network device to determine that the retransmission mechanism of the one or more PDU sets is: enabling the access network device to enable an unacknowledged mode UM related to the part or all of the data packets of the one or more PDU sets.

Optionally, the first information includes first indication information, where
the first indication information is used to enable the access network device to determine that the retransmission mechanism of the one or more PDU sets is: enabling the access network device to disable retransmission of the part or all of the data packets of the one or more PDU sets.

Optionally, the first indication information further indicates to disable automatic repeat request ARQ retransmission of the part or all of the data packets of the one or more PDU sets.

Optionally, the first information includes a first parameter, and the first parameter indicates a maximum number of consecutive lost packets of a data packet of one PDU set; and
the first parameter indicates the access network device to determine that the retransmission mechanism of the one or more PDU sets is: enabling the access network device to determine, based on a maximum number of consecutive lost packets of the one or more PDU sets and the first parameter, to enable or disable retransmission of the part or all of the data packets of the one or more PDU sets.

Optionally, that the first parameter indicates the access network device to determine the retransmission mechanism of the one or more PDU sets specifically includes:

The first parameter indicates the access network device to determine, based on the maximum number of consecutive lost packets of the one or more PDU sets, to enable or disable retransmission of the part or all of the data packets of the one or more PDU sets; and
when a maximum number of consecutive lost packets of a first PDU set is less than or equal to the first parameter, the access network device determines to disable retransmission of a part or all of data packets of the first PDU set; or
when a maximum number of consecutive lost packets of a first PDU set is greater than the first parameter, the access network device determines to enable retransmission of a part or all of data packets of the first PDU set, where the first PDU set belongs to the one or more PDU sets.

Optionally, the first parameter further indicates the access network device to enable an acknowledged mode AM of a data packet of the first PDU set, and the first PDU set belongs to the one or more PDU sets.

Optionally, the first information includes a second parameter, and the second parameter indicates a maximum number of lost packets or a maximum packet loss ratio of a data packet of one PDU set; and
the second parameter indicates the access network device to determine that the retransmission mechanism of the one or more PDU sets is: enabling the access network device to determine, based on a maximum number of lost packets or a maximum packet loss ratio of the one or more PDU sets and the second parameter, to enable or disable retransmission of the part or all of the data packets of the one or more PDU sets.

Optionally, the second parameter indicates the access network device to determine, based on the maximum number of lost packets or the maximum packet loss ratio of the one or more PDU sets, to enable or disable retransmission of the part or all of the data packets of the one or more PDU sets; and
when a maximum number of lost packets or a maximum packet loss ratio of a first PDU set is less than or equal to the second parameter, the access network device determines to disable retransmission of a part or all of data packets of the first PDU set; or
when a maximum number of lost packets or a maximum packet loss ratio of the first PDU set is greater than the second parameter, the access network device determines to enable retransmission of a part or all of data packets of a first PDU set, where the first PDU set belongs to the one or more PDU sets.

Optionally, the second parameter further indicates the access network device to enable an acknowledged mode AM related to a data packet of the first PDU set, and the first PDU set belongs to the one or more PDU sets.

Optionally, the first information is carried in a QoS parameter of a first quality of service QoS flow, and the first QoS flow is used to transmit the one or more PDU sets.

Optionally, the error correction mode includes a forward error correction FEC mode.

Optionally, the second parameter is forward error correction content ratio FEC content ratio information.

A seventh aspect of this application provides a communication apparatus. The apparatus can implement the method in the first aspect or any possible implementation of the first aspect. The apparatus includes a corresponding unit or module configured to perform the foregoing method. The unit or module included in the apparatus can be implemented by software and/or hardware. For example, the apparatus may be an access network device, or the apparatus may be a component (for example, a processor, a chip, or a chip system) in the access network device, or the apparatus may be a logical module or software that can completely or partially implement the access network device. The communication apparatus includes a transceiver module and a processing module.

An eighth aspect of this application provides a communication apparatus. The apparatus can implement the method in the second aspect or any possible implementation of the second aspect. The apparatus includes a corresponding unit or module configured to perform the foregoing method. The unit or module included in the apparatus can be implemented by software and/or hardware. For example, the apparatus may be an application function, or the apparatus may be a component (for example, a processor, a chip, or a chip system) in the application function, or the apparatus may be a logical module or software that can completely or partially implement the application function. The communication apparatus includes a transceiver module and a processing module.

A ninth aspect of this application provides a communication apparatus. The apparatus can implement the method in the third aspect or any possible implementation of the third aspect. The apparatus includes a corresponding unit or module configured to perform the foregoing method. The unit or module included in the apparatus can be implemented by software and/or hardware. For example, the apparatus may be a user plane function, or the apparatus may be a component (for example, a processor, a chip, or a chip system) in the user plane function, or the apparatus may be a logical module or software that can completely or partially implement the user plane function. The communication apparatus includes a transceiver module and a processing module.

A tenth aspect of embodiments of this application provides a communication apparatus, including at least one processor. The at least one processor is coupled to a memory. The memory is configured to store a program or instructions. The at least one processor is configured to execute the program or the instructions, so that the apparatus implements the method in any possible implementation of the first aspect to the third aspect.

An eleventh aspect of embodiments of this application provides a communication apparatus, including a communication interface, configured to input and/or output signaling or data; and a processor, configured to execute a computer-executable program, so that the apparatus implements the method in any possible implementation of the first aspect to the third aspect.

A twelfth aspect of embodiments of this application provides a communication apparatus, including at least one logic circuit and an input/output interface. The input/output interface is configured to input or output information. The logic circuit is configured to perform the method in any possible implementation of the first aspect to the third aspect.

A thirteenth aspect of embodiments of this application provides a computer program product (or referred to as a computer program). When the computer program product is executed by a processor, the processor performs the method in the first aspect to the third aspect and any possible implementation of the first aspect to the third aspect.

A fourteenth aspect of embodiments of this application provides a chip system. The chip system includes at least one processor, configured to support a communication apparatus in implementing the method in the first aspect to the third aspect and any possible implementation of the first aspect to the third aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit. The interface circuit provides program instructions and/or data for the at least one processor.

A fifteenth aspect of embodiments of this application provides a communication system. The communication system includes the communication apparatus in the fourth aspect, the communication apparatus in the fifth aspect, and/or the communication apparatus in the sixth aspect.

For technical effects brought by any design manner in the seventh aspect to the fifteenth aspect, refer to technical effects brought by different implementations in the first aspect to the third aspect. Details are not described herein again.

A sixteenth aspect of embodiments of this application provides a protocol data unit set-based communication method, where the method is applied to a communication system, the communication system includes an access network device and an application function, and the method includes:

The user plane function sends first information to the access network device, where the first information is used to enable the access network device to determine a retransmission mechanism of one or more protocol data unit sets PDU SET;
the access network device receives the first information; and
the access network device disables retransmission of a part or all of data packets of a first PDU set based on the first information, where the first PDU set belongs to the one or more PDU sets.

A seventeenth aspect of embodiments of this application provides a protocol data unit set-based communication method, where the method is applied to a communication system, the communication system includes an access network device and a user plane function, and the method includes:
The user plane function sends first information to the access network device, where the first information is used to enable the access network device to determine a retransmission mechanism of one or more protocol data unit sets PDU SET;
the access network device receives the first information; and
the access network device disables retransmission of a part or all of data packets of a first PDU set based on the first information, where the first PDU set belongs to the one or more PDU sets.

It should be understood that, for a component in the device, the foregoing "sending" may be referred to as "outputting", and the foregoing "receiving" may be referred to as "inputting".

### BRIEF DESCRIPTION OF DRAWINGS

FIG. 1 is a diagram of a communication system according to an embodiment of this application;
FIG. 2 is a diagram of network coding in an access network device;
FIG. 3 is a schematic flowchart of processing a PDU set;
FIG. 4 is a diagram of processing in an FEC error correction mode;
FIG. 5 is a schematic flowchart of an embodiment of a protocol data unit set-based communication method according to an embodiment of this application;
FIG. 6 is a schematic flowchart of another embodiment of a protocol data unit-based communication method according to an embodiment of this application;
FIG. 7 is a schematic flowchart of another embodiment of a protocol data unit-based communication method according to an embodiment of this application;
FIG. 8 is a diagram of a manner of transferring first indication information according to an embodiment of this application;
FIG. 9 is a schematic flowchart of determining a retransmission mechanism of a part or all of data packets of a first PDU set according to an embodiment of this application;
FIG. 10 is a schematic flowchart of determining a retransmission mechanism of a part or all of data packets of a first PDU set according to an embodiment of this application;
FIG. 11 is a diagram of a structure of a data packet of a first PDU set according to an embodiment of this application;
FIG. 12 is a schematic flowchart of an application scenario according to an embodiment of this application;
FIG. 13 is a schematic flowchart of an application scenario according to an embodiment of this application;
FIG. 14 is a diagram of a communication apparatus according to this application;
FIG. 15 is another diagram of a communication apparatus according to this application;
FIG. 16 is another diagram of a communication apparatus according to this application; and
FIG. 17 is another diagram of a communication apparatus according to this application.

### DESCRIPTION OF EMBODIMENTS

The following clearly and completely describes technical solutions in embodiments of this application with reference to the accompanying drawings in embodiments of this application. It is clear that the described embodiments are merely some but not all of embodiments of this application. The terms "first" and "second", corresponding term numbers, and the like in this specification, the claims, and the accompanying drawings of this application are used for distinguishing between similar objects, and are not necessarily used for describing a specific sequence or order. It should be understood that the terms used in such a way are interchangeable in proper circumstances, which is merely a discrimination manner that is used when objects having a same attribute are described in embodiments of this application. In addition, terms "include", "have", and any other variants thereof mean to cover the non-exclusive inclusion, so that a process, method, system, product, or device that includes a series of units is not necessarily limited to those units, but may include other units not expressly listed or inherent to such a process, method, product, or device.

In descriptions of this application, "/" means "or" unless otherwise specified. For example, A/B may indicate A or B. In this application, "and/or" describes only an association relationship for describing associated objects and indicates that three relationships may exist. For example, A and/or B may indicate the following three cases: Only A exists, both A and B exist, and only B exists. In addition, in the descriptions of this application, "at least one item" means one or more items, and "a plurality of items" means two or more items. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new generation (new generation, NR) communication system, or a future 6th generation communication system.

In the communication systems, a communication system operated by an operator may be referred to as an operator network. The operator network may also be referred to as a public land mobile network (public land mobile network, PLMN), is a network established and operated by a government or an operator approved by the government to provide a land mobile communication business for the public, and is mainly a public network through which a mobile network operator (mobile network operator, MNO) provides a mobile broadband access service for a user. The operator network or the PLMN network described in embodiments of this application may be a network compliant with a requirement of a 3rd generation partnership project (3rd generation partnership project, 3GPP) standard, which is referred to as a 3GPP network for short. Generally, the 3GPP network is operated by the operator, and includes but is not limited to a 5th generation (5th generation, 5G) mobile communication network, a 4th generation (4th generation, 4G) mobile communication network, or a 3rd generation (3rd generation, 3G) mobile communication technology network. A future 6th generation (6th generation, 6G) mobile communication network is also included.

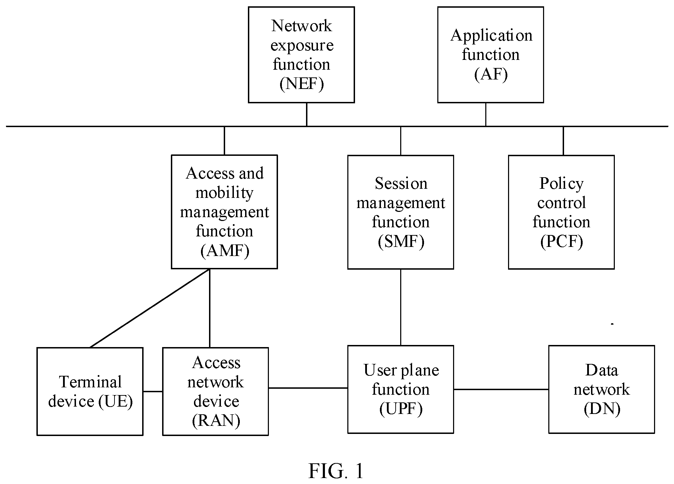

FIG. 1 is a diagram of a communication system according to an embodiment of this application. As shown in FIG. 1, the communication system includes an access and mobility management function (access and mobility management function, AMF), a session management function (session management function, SMF), unified data management (unified data management, UDM), a radio access network (radio access network, RAN), a policy control function (policy control function, PCF), a terminal device, a user plane function (user plane function, UPF), a network exposure function (network exposure function, NEF), an application function (Application Function, AF), a data network (data network, DN), and the like.

The following briefly describes network functions (or network elements) shown in FIG. 1.

The terminal device may be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides a voice/data for a user, for example, a handheld device having a wireless connection function or a vehicle-mounted device. Currently, some terminals are, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device or a computing device that has a wireless communication function or another processing device connected to a wireless modem, a wearable device, a terminal device in a 5G network, and a terminal device in a future evolved public land mobile network. This is not limited in embodiments of this application.

By way of example, but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or an accessory of the user. The wearable device is not only a hardware device, but also implements a powerful function through software support, data exchange, and cloud interaction. Generic wearable smart devices include full-featured and large-size devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In addition, the terminal device in embodiments of this application may alternatively be a terminal device in an internet of things (internet of things, IoT) system. IoT is an important part of future development of information technologies. A main technical feature of the IoT is connecting a thing to a network by using a communication technology, to implement an intelligent network for interconnection between a person and a machine or between things.

It should be noted that the terminal device and an access network device may communicate with each other by using an air interface technology (for example, an NR technology or an LTE technology). Alternatively, the terminal device and the terminal device may communicate with each other by using an air interface technology (for example, an NR technology or an LTE technology).

In embodiments of this application, the terminal device may be replaced with an apparatus configured to implement a function of the terminal device, or may be an apparatus that can support the terminal device in implementing the function, for example, a chip system or a chip. The apparatus may be installed in the terminal device. In addition, the chip system may include a chip, or may include a chip and another discrete component.

The access network device (also referred to as a radio access network) may be a device having a wireless transceiver function. The access network device may be a device that provides a wireless communication function service, is usually located on a network side, and includes but is not limited to: a next generation base station (gNodeB, gNB) in a 5th generation communication system, a next generation base station in a 6th mobile communication system, a base station in a future mobile communication system, an access node in a Wi-Fi system, an evolved nodeB (evolved nodeB, eNB) in an LTE system, a radio network controller (radio network controller, RNC), a nodeB (nodeB, NB), a base station controller (base station controller, BSC), a home base station (for example, a home evolved NodeB, or a home NodeB, HNB), a radio access point, a base band unit (base band unit, BBU), a transmission reception point (transmission reception point, TRP), a transmitting point (transmitting point, TP), a base transceiver station (base transceiver station, BTS), and the like. In a network structure, the access network device may include a central unit (central unit, CU) node, a distributed unit (distributed unit, DU) node, a RAN device including a CU node and a DU node, or a RAN device including a CU control plane node, a CU user plane node, and a DU node. The access network device serves a cell, and the user equipment communicates with the base station by using a transmission resource (for example, a frequency domain resource, namely, a spectrum resource) used by the cell. The cell may be a cell corresponding to a base station (for example, the gNodeB), or may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service. The access network device may be a macro base station, or may be a micro base station or an indoor base station, or may be a relay node or a donor node, a device that provides a wireless communication service for the user equipment and that is in a V2X communication system, a radio controller in a cloud radio access network (cloud radio access network, CRAN) scenario, a relay station, a vehicle-mounted device, a wearable device, a network device in a future evolved network, or the like. A specific technology and a specific device form that are used by the access network device are not limited in embodiments of this application.

A unified data management unit (also referred to as a unified data management network element, a unified data management network element entity, a data management device, or a unified data management network element device) is a type of core network device, and is mainly configured for handling of a terminal device identifier, access authentication, registration, mobility management, and the like. The unified data management is a control plane device.

A policy control function (also referred to as a policy control network element, a policy control function network element, a policy control device, a policy control function network element entity, or the like) is mainly responsible for policy control function network elements such as session-level or service flow-level charging, quality of service bandwidth guarantee, mobility management, and terminal device policy decision.

A session management function (also referred to as a session management function network element) is mainly configured to perform functions such as session management, execution of a control policy delivered by the PCF, UPF selection, and internet protocol address assignment to the terminal device.

An access and mobility management function (also referred to as an access and mobility management function entity, an access and mobility management device, an access and mobility management function network element, an access management device, or a mobility management device) is a type of core network device, is mainly configured to perform mobility management, access management, and the like, and may be configured to implement functions other than session management in functions of a mobility management entity (mobility management entity, MME), for example, lawful interception, access authorization (or authentication), user equipment registration, mobility management, a tracking area update procedure, reachability detection, selection of a session management network element, and mobility state transition management.

A user plane function (also referred to as a user plane device, a user plane function network element, a user plane network element, or a user plane function entity) mainly includes the following functions: user plane-related functions such as data packet routing and transmission, packet detection, service usage reporting, QoS handling, lawful interception, uplink packet detection, and downlink data packet storage.

The application function AF is similar to an application server, and interacts with another 5G core network control plane (NF) and provides a service. The AF may exist for different application services, and may belong to the operator or a trusted third party. For example, a main function of the network element is to notify the PCF of a latest service requirement of a third-party enterprise for an application. The PCF generates a corresponding quality of service (quality of service, QoS) rule based on the requirement, to ensure that a service provided by a network meets the requirement proposed by the third party.

A network exposure function (NEF) may also be referred to as a network exposure device, a network exposure function entity, a network exposure function network element, a network capability exposure function entity, a network capability exposure function device, a network capability exposure function network element, or a network capability exposure device. The NEF is mainly configured to support capability and event exposure, for example, securely expose, to the outside, a service, a capability, or the like provided by a 3GPP network function.

It should be understood that the RAN, the SMF, the PCF, or the AF in this embodiment of this application may also be referred to as a communication apparatus or a communication device, and may be a general-purpose device or a dedicated device. This is not specifically limited in this application.

It should be further understood that the foregoing names are merely used to distinguish between different functions, and do not represent that these devices are separate physical devices. Specific forms of the foregoing devices are not limited in this application. For example, the devices may be integrated into a same physical device, or may be separately different physical devices. In an actual deployment, network functions (or functions for short), network elements, or devices may be co-deployed. For example, the access and mobility management function network element and the session management function network element may be co-deployed, and the session management function network element and the user plane function network element may be co-deployed. When two functions are co-deployed, interaction between the two functions provided in embodiments of this application becomes an internal operation of the co-deployed functions or may be omitted.

It may be understood that the foregoing function may be a network element in a hardware device, may be a software function running on dedicated hardware, a combination of hardware and software, or a virtualization function instantiated on a platform (for example, a cloud platform).

It should be noted that names of the devices (such as the AF, the SMF, the PCF, and the AMF) in FIG. 1 are merely names, and the names do not constitute a limitation on functions of the devices. In a 5G network and another future network, the devices may alternatively have other names. This is not specifically limited in this application. For example, in a 6G network, terms in 5G may be reused for a part or all of the network elements, or other names may be used. A general explanation is provided herein, and details are not described below again.

It should be noted that examples mentioned in this application do not represent the optimal; "first", "second", and the like mentioned in this application are merely used to distinguish between different information, messages, or other objects, and do not represent a sequence relationship; and mutual reference may be made to embodiments in this application. For same or similar steps or terms, details are not described again.

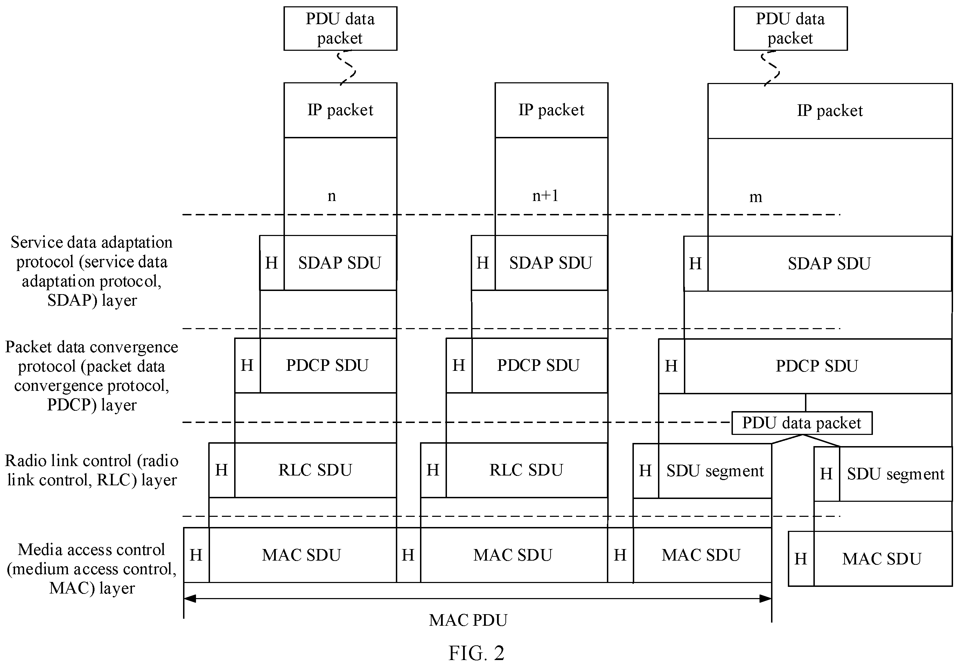

To better understand the technical solutions in embodiments of this application, the following describes some technical concepts in embodiments of this application.
1. Network coding (network coding, NC). FIG. 2 is a diagram of network coding in an access network device.

A network coding function in this application includes performing network coding on an original data packet and adding a coded packet header. Network coding may be implemented by using a coder. An input of the coder is K original data packets, and an output of the coder is N coded data packets (coded packets for short), where both N and K are positive integers, and N is greater than K. The coded packet includes (N-K) (N minus K) redundant packets and K system packets, or N redundant packets (that is, all coded packets are redundant packets, and do not include a system packet). Content of a packet body of the system packet is consistent with content of the original data packet (that is, the system packet includes the coded packet header and the original data packet). Therefore, the system packet may also be obtained by directly adding the coded packet header to the original data packet without being coded by the coder. In this case, a coding coefficient of the system packet is equivalent to a unit vector. A coding coefficient of the redundant packet is a non-unit vector. Based on an association between content of a redundant packet and content of an original data packet that generates the redundant packet, a receiver may perform decoding based on the redundant packet together with a successfully received original data packet or system packet, to recover an unsuccessfully received original data packet. Based on a feature of network coding, packet sizes of the original data packets are equal. Further, the network coding function may further include a process of processing an original data unit, for example, a service data unit (service data unit, SDU) or a protocol data unit (protocol data unit, PDU), to obtain original data packets of a same size. The processing may include one or more of segmentation, concatenation, or padding (padding). The network coding function of a transmitter corresponds to a network decoding function of the receiver. The receiver may recover the K original data packets by decoding at least K successfully received coded packets together. A protocol layer having the network coding function or the decoding function corresponding to network coding is referred to as a network coding/decoding layer. In this application, the network coding/decoding layer is referred to as a network coding layer for short. In other words, the protocol layer with network coding is referred to as the network coding layer.

The network coding layer may be a protocol layer like a radio resource control (radio resource control, RRC) layer, a service data adaptation protocol (service data adaptation protocol, SDAP) layer, a packet data convergence protocol (packet data convergence protocol, PDCP) layer, a backhaul adaptation protocol (backhaul adaptation protocol, BAP) layer, a radio link control (radio link control, RLC) layer, a media access control (medium access control, MAC) layer, or a physical layer (physical layer, PHY). The network coding layer may alternatively be a new protocol layer other than the PHY layer, the MAC layer, the RLC layer, the BAP layer, the PDCP layer, the SDAP layer, and the RRC layer. The network coding layer may be added above the PDCP layer (for example, in 5G NR, the network coding layer is added between the PDCP layer and the SDAP layer), or the network coding layer is added above the BAP layer, or the network coding layer is added between the PDCP layer and the RLC layer, or the network coding layer is added between the RLC layer and the MAC layer, or the network coding layer is added between the MAC layer and the PHY layer.

A data packet included in a PDU set (PDU SET, or referred to as a PDU set, or referred to as a PDU Set) is used as an example. The PDU set includes an Internet Protocol (Internet Protocol, IP) data packet (packet), and the IP data packet is a data packet at a PDU granularity. The data packet included in the PDU set may also be referred to as a PDU data packet, a PDU, or a data packet for short.

At the SDAP layer, the IP packet is used as an SDAP SDU, and a data packet header (head, H) of the SDAP SDU is added. Then, the SDAP layer forwards the SDAP SDU and the header added at the SDAP layer as a complete data packet (for ease of description, the complete data packet is referred to as an SDAP data packet) to the PDCP layer.

At the PDCP layer, the SDAP data packet is used as a PDCP SDU, and a data packet header of the PDCP SDU is added. Then, the PDCP layer forwards the PDCP SDU and the header added at the PDCP layer as a complete data packet (for ease of description, the complete data packet is referred to as a PDCP data packet) to the RLC layer.

At the RLC layer, the PDCP data packet is used as an RLC SDU, and a data packet header of the RLC SDU is added. Then, the RLC layer forwards the RLC SDU and the header added at the RLC layer as a complete data packet (for ease of description, the complete data packet is referred to as an RLC data packet) to the MAC layer. It should be noted that, at the RLC layer, segmentation processing may be performed on the PDCP data packet. For example, a PDCP data packet corresponding to an m^{th} IP packet is segmented into two service data unit segments (SDU segment) at the RLC layer. The RLC layer uses the SDU segments as RLC SDUs, and then a header is separately added.

At the MAC layer, the RLC data packet is used as a MAC SDU, and a data packet header of the MAC SDU is added. The MAC layer concatenates one or more MAC SDUs and corresponding headers, to form a MAC PDU.

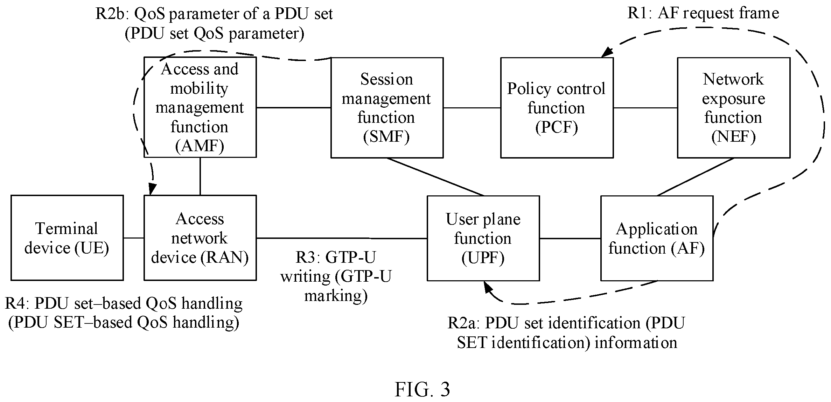

2. PDU set. The PDU set may also be referred to as a set of PDUs. The PDU set includes one or more PDU data packets. The following describes a processing procedure of the PDU set in a 5G system (5G system, 5GS) with reference to the accompanying drawings. FIG. 3 is a schematic flowchart of processing a PDU set.

R1: An AF sends an AF request (AF request) to a PCF, where the AF request carries PDU set-related information, and the PDU set-related information may also be referred to as PDU set information (PDU set information). The PDU set-related information includes flow information (protocol description) and QoS parameters (QoS parameters) of the PDU set. The QoS parameters of the PDU set include a PDU set delay budget (PDU Set Delay Budget, PSDB), a PDU set error rate (PDU Set Error Rate, PSER), and PDU set integrated handling information (PDU Set Integrated Handling Information, PSIHI).

The PDU set information specifically includes any one or more of the following information: a PDU set sequence number (PDU Set Sequence Number), an indication of an end PDU of the PDU set (Indication of End PDU of the PDU Set), a PDU sequence number within the PDU set (PDU Sequence Number within a PDU Set), a PDU set size in bytes (PDU Set Size in bytes), or a PDU set importance (PDU Set Importance), where the PDU set importance is used to identify a relative importance of the PDU set compared to other PDU sets within a QoS flow (which identifies the relative importance of a PDU Set compared to other PDU Sets within a QoS Flow).

Correspondingly, the PCF generates a PDU set-related policy and charging control (PCC) rule based on the PDU set-related information provided by the AF. The PCF transfers the PCC rule related to the PDU set to an SMF.

Correspondingly, the SMF generates a PDU set-related QoS parameter and a PDU set detection rule based on the PCC rule.

R2a: The AF sends PDU set identification (PDU SET identification) information to a UPF.

R2b: The SMF sends the QoS parameter of the PDU set to a RAN through an AMF.

R3: The UPF identifies data packets belonging to a same PDU set. Then, the PDU set information of the PDU set to which the data packet belongs is carried in a general packet radio service tunneling protocol-user plane (general packet radio service tunneling protocol-user plane, GTP-U) packet header of the data packet. The UPF sends, to the RAN, the data packet carrying the PDU set information, to transfer the PDU set information to the RAN.

R4: The RAN performs PDU set-based QoS handling (PDU SET-based QoS handling) based on the received QoS parameter of the PDU set.

3. Error correction mode of a data packet of a PDU set. The following uses an example in which the error correction mode is forward error correction (forward error correction, FEC) for description. It should be noted that the error correction mode in this embodiment of this application may alternatively be in another manner. This is not limited herein.

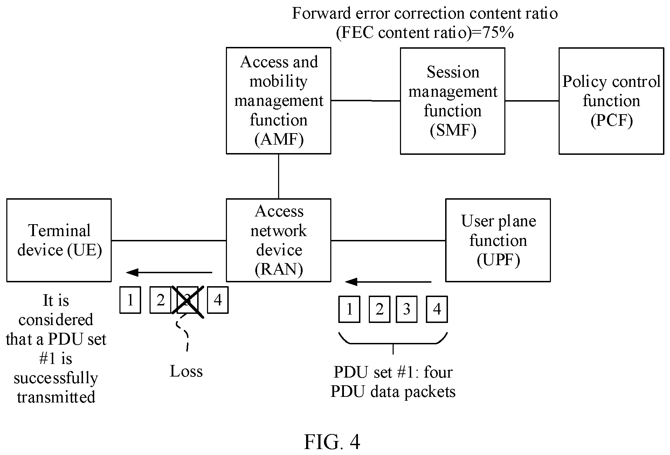

FIG. 4 is a diagram of processing in an FEC error correction mode. An AF calculates a packet loss rate based on a number of lost packets on a terminal side, and then determines, based on the packet loss rate, that an application layer enables or disables the error correction mode. A Wi-Fi scenario is used as an example. A PCF transfers PDU set information to a RAN through an SMF. The PDU set information indicates that a parameter, that is, a forward error correction content ratio (FEC content ratio) of the error correction mode is 75%. The FEC error correction mode is enabled on an AF side, and the FEC content ratio of the FEC error correction mode is 75%. For example, a UPF transmits a PDU set #1 to UE through the RAN. The PDU set #1 includes four PDU data packets. After the PDU set #1 passes through the RAN, a PDU data packet 3 is lost in a transmission process from the RAN to the UE. Theoretically, a UE side should receive the four PDU data packets of the PDU set #1. However, due to a packet loss in the transmission process, the UE actually receives only the three data packets of the PDU set #1. However, after the FEC error correction mode with the FEC content ratio of 75% is enabled for the PDU set #1, the UE can still successfully recover data of the PDU set #1 based on the three data packets of the PDU set #1. Therefore, it may be considered that even if one packet is lost, the PDU set #1 is still successfully transmitted. In other words, an appropriate packet loss during data packet transmission between an access network device and a terminal device may not affect data recovery performed by the terminal device on the data packet.

The applicant finds through research that, after the FEC is enabled by the AF, the terminal device detects a data packet loss, and the terminal device sends a packet loss notification of the data packet in the transmission process to the access network device. After receiving the packet loss notification from the terminal device, the access network device triggers retransmission of the lost data packet. However, when the access network device retransmits the data packet, a round-trip time (round-trip time, RTT) delay is referenced, causing a delay increase and affecting communication quality of the terminal device. After the FEC is enabled by the AF, the terminal device can tolerate the appropriate packet loss in the process in which the access network device sends data packets to the terminal device. Therefore, how to reduce the delay becomes an urgent technical problem to be resolved.

Based on this, an embodiment of this application proposes a protocol data unit set-based communication method: An access network device receives first information, where the first information is used to enable the access network device to determine a retransmission mechanism of one or more protocol data unit sets PDU SET; and the access network device disables a retransmission mechanism of a part or all of data packets of a first PDU set based on the first information, where the first PDU set belongs to the one or more PDU sets. The access network device determines a retransmission mechanism of a data packet of a PDU set based on an external indication. Retransmission of the part or all of the data packets of the first PDU set is disabled, so that a delay can be reduced, network resource occupation can be reduced, and a data throughput can be improved.

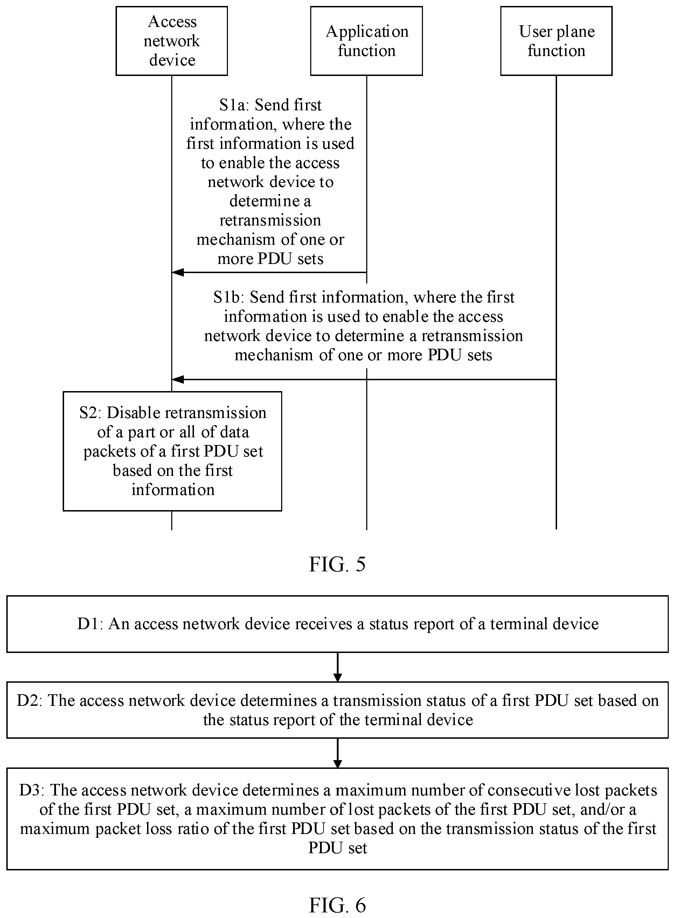

The following describes embodiments of this application with reference to the accompanying drawings. FIG. 5 is a schematic flowchart of an embodiment of a protocol data unit set-based communication method according to an embodiment of this application. The protocol data unit-based communication method provided in this embodiment of this application includes the following content.

S1a: An application function sends first information to an access network device, where the first information is used to enable the access network device to determine and indicate a retransmission mechanism of one or more protocol data unit sets PDU SET.

In step S1a, the application function sends the first information to the access network device, where the first information is used to enable the access network device to determine the retransmission mechanism of the one or more PDU sets. Optionally, the first information may further indicate an error correction mode of the one or more PDU sets or a transmission requirement of the one or more PDU sets.

In a possible example, the first information is carried in a QoS parameter of a first QoS flow, and the first QoS flow is used to transmit the one or more PDU sets. Therefore, the first information indicates the one or more PDU sets, and the first information is used to enable the access network device to determine the retransmission mechanism of the one or more PDU sets corresponding to the first QoS flow.

For a data packet of the one or more PDU sets, optionally, the AF may enable an error correction mode of the data packet of the one or more PDU sets. The AF may enable the error correction mode of the data packet of the one or more PDU sets in a plurality of manners. For example, the AF enables the error correction mode of the data packet of the one or more PDU sets based on a packet loss rate of communication between the access network device and the terminal device. For another example, the AF enables the error correction mode of the data packet of the one or more PDU sets based on an indication of another network function (or network element). The error correction mode includes but is not limited to forward error correction (Forward Error Correction, FEC).

Optionally, the first information further indicates to enable the error correction mode for a part or all of data packets of the one or more PDU sets. For example, the first information further indicates to enable the FEC mode for the data packet of the one or more PDU sets.

Further, optionally, when the first information further indicates to enable the error correction mode for the part or all of the data packets of the one or more PDU sets, a network function (or a network element or a device) in a network may further correspondingly update (or configure) a QoS parameter of a first PDU set, configuration information of a data radio bearer (data radio bearer, DRB) that carries the data packet of the one or more PDU sets, and a QoS parameter of a QoS flow that carries the data packet of the one or more PDU sets. Optionally, the access network device may further adjust a retransmission mode of an RLC layer of the access network device, or a retransmission mode of a MAC layer of the access network device. In other words, the access network device may perform retransmission of the part or all of the data packets of the one or more PDU sets through the RLC layer, or perform retransmission of the part or all of the data packets of the one or more PDU sets through the MAC layer. For example, because the error correction mode is enabled for the part or all of the data packets of the one or more PDU sets, on a premise that successful data transmission is ensured, a packet loss of a part of the data packets of the one or more PDU sets may be allowed. Therefore, a PCF may adjust a PDU error rate (PDU Error Rate, PER) and/or a PDU set error rate (PDU Set Error Rate, PSER) in the QoS parameter of the one or more PDU sets.

For the first information, there are a plurality of possible implementations, for example, any one or more of the following Manner 1 to Manner 3.

Manner 1: The first information includes first indication information. The first indication information is used to enable the access network to determine that the retransmission mechanism of the one or more PDU sets is: enabling the access network device to enable an unacknowledged mode (unacknowledged mode, UM) of the data packet of the one or more PDU sets, and/or disable retransmission of the part or all of the data packets of the one or more PDU sets. Optionally, disabling retransmission of the part or all of the data packets of the one or more PDU sets includes: disabling an automatic repeat request (automatic repeat request, ARQ) for the part or all of the data packets of the one or more PDU sets.

It should be noted that, in this embodiment of this application, disabling retransmission of the part or all of the data packets of the one or more PDU sets also means that the part or all of the data packets of the one or more PDU sets is not retransmitted.

Specifically, based on the first indication information, the access network device enables the UM mode of the data packet of the one or more PDU sets, and the access network device indicates that the terminal device does not need to feed back indication information of an acknowledgment (acknowledgment, ACK) of the data packet of the one or more PDU sets and/or indication information of a negative acknowledgment (negative acknowledgment, NACK) of the data packet of the one or more PDU sets.

Further, based on the first indication information, the access network device disables the automatic repeat request for the part or all of the data packets of the one or more PDU sets. This can effectively increase bandwidth resources used for data transmission, and reduce a round-trip time (Round-Trip Time, RTT) delay caused by retransmission.

Further, when the first indication information is used to enable the access network device to disable retransmission of a part of the data packets of the one or more PDU sets, the access network device may further enable retransmission of a part of the data packets of the one or more PDU sets. Specifically, the access network device enables retransmission of a part that is of the data packets of the one or more PDU sets and whose response result is a NACK result.

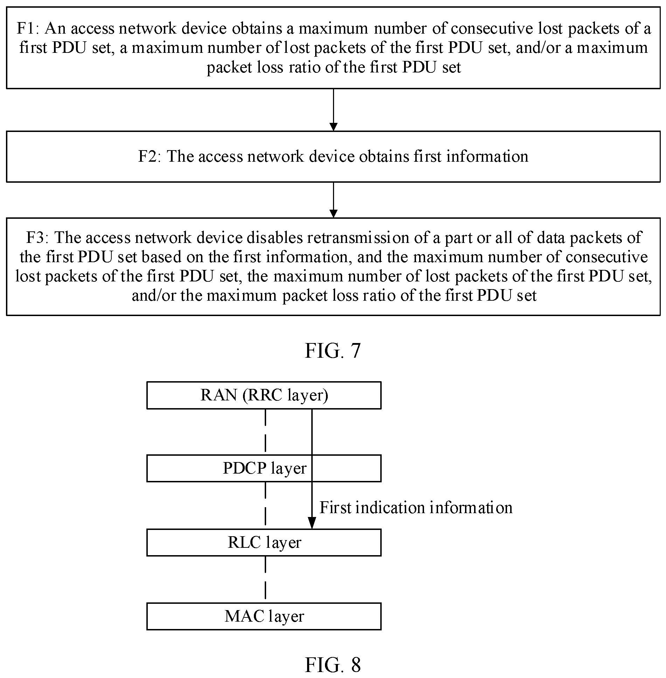

For example, when the first information is the first indication information, a manner of transferring the first indication information in the access network device is shown in FIG. 8. FIG. 8 is a diagram of a manner of transferring first indication information according to an embodiment of this application. After an RRC layer of the access network device obtains the first indication information, the RRC layer of the access network device sends the first indication information to the RLC layer of the access network device. The RLC layer of the access network device determines a retransmission mechanism of the part or all of the data packets of the one or more PDU sets based on the first indication information.

In another possible implementation, the RRC layer of the access network device sends the first indication information to a PDCP layer of the access network device. The PDCP layer of the access network device determines the retransmission mechanism of the part or all of the data packets of the one or more PDU sets based on the first indication information.

For example, the first indication information may also be referred to as FEC indication information (FEC indicator).

Optionally, the first indication information may further include identification information of the one or more PDU sets.

Manner 2: The first information includes a first parameter, and the first parameter indicates a maximum number of consecutive lost packets of a data packet of one PDU set. Specifically, the first parameter indicates a requirement for the maximum number of consecutive lost packets of a data packet of one PDU set. It may be understood that the first parameter indicates that a number of consecutive lost packets of a data packet of one PDU set during end-to-end transmission (for example, transmission between UE and a UPF) should be less than or equal to the maximum number of consecutive lost packets. For example, the first parameter is 2, and the first parameter indicates that the maximum number of consecutive lost packets of the data packet of one PDU set is 2. The maximum number of consecutive lost packets is a number of lost data packets that are of one PDU set and whose PDU sequence numbers are consecutive. For example, a PDU set #1 includes a data packet 0, a data packet 1, a data packet 2, a data packet 3, a data packet 4, a data packet 5, and a data packet 6. In a transmission process from the access network device to the terminal device, a packet loss occurs in the PDU set #1, and data packets of the PDU set #1 received by the terminal device are the data packet 0, the data packet 3, the data packet 5, and the data packet 6. In this case, the maximum number of consecutive lost packets of the PDU set # 1 is 2.

The first parameter indicates that the retransmission mechanism of the one or more PDU sets is: enabling the access network device to determine, based on the maximum number of consecutive lost packets of the one or more PDU sets and the first parameter, to enable or disable retransmission of the part or all of the data packets of the one or more PDU sets.

In a possible implementation, the first parameter indicates the access network device to determine, based on the maximum number of consecutive lost packets of the one or more PDU sets, to enable or disable retransmission of the part or all of the data packets of the one or more PDU sets. When a maximum number of consecutive lost packets of the first PDU set is less than or equal to the first parameter, the access network device determines to disable retransmission of the part or all of the data packets of the first PDU set; or when the maximum number of consecutive lost packets of the first PDU set is greater than the first parameter, the access network device determines to enable retransmission of the part or all of the data packets of the first PDU set.

Optionally, the first parameter further indicates the access network device to enable (or determine) an acknowledged mode (acknowledged mode, AM) related to the data packet of the one or more PDU sets. Correspondingly, after the access network device determines, from the one or more PDU sets based on the first parameter, a PDU set for which retransmission of a part or all of the data packets needs to be disabled, for example, the access network device determines that retransmission of the part or all of the data packets of the first PDU set needs to be disabled. The access network device enables the AM mode of the data packet of the first PDU set, and the access network device indicates that the terminal device needs to feed back indication information of an ACK of the data packet of the first PDU set and/or indication information of a negative acknowledgment NACK of the data packet of the first PDU set.

Manner 3: The first information includes a second parameter, and the second parameter indicates a maximum number of lost packets or a maximum packet loss ratio of a data packet of one PDU set. Specifically, the second parameter indicates a requirement for the maximum number of lost packets or the maximum packet loss ratio of a data packet of one PDU set. It may be understood that the second parameter indicates that a total number of lost packets of a data packet of one PDU set during end-to-end transmission (for example, transmission between the UE and the UPF) should be less than or equal to the maximum number of lost packets, or the second parameter indicates that a ratio of a number of lost packets of a data packet of one PDU set during end-to-end transmission (for example, transmission between the UE and the UPF) to a number of data packets of the PDU set should be less than or equal to the maximum packet loss ratio. For example, the second parameter is 3, and the second parameter indicates that the maximum number of lost packets of the data packet of one PDU set is 3. The maximum number of lost packets refers to the total number of lost packets of a data packet of one PDU set. For example, the PDU set #1 includes the data packet 0, the data packet 1, the data packet 2, the data packet 3, the data packet 4, the data packet 5, and the data packet 6. In the transmission process from the access network device to the terminal device, a packet loss occurs in the PDU set #1, and data packets of the PDU set #1 received by the terminal device are the data packet 0, the data packet 3, the data packet 5, and the data packet 6. In this case, the maximum number of lost packets of the PDU set #1 is 3. The maximum packet loss ratio is a ratio of the total number of lost packets of the data packet of one PDU set to the total number of the data packet of the PDU set. For example, the PDU set #1 includes the data packet 0, the data packet 1, the data packet 2, the data packet 3, the data packet 4, the data packet 5, and the data packet 6. In the transmission process from the access network device to the terminal device, a packet loss occurs in the PDU set #1, and data packets of the PDU set #1 received by the terminal device are the data packet 0, the data packet 3, the data packet 5, and the data packet 6. In this case, the maximum packet loss ratio of the PDU set #1 is 3/7.

The second parameter indicates that the retransmission mechanism of the one or more PDU sets is: enabling the access network device to determine, based on a maximum number of lost packets or a maximum packet loss ratio of the one or more PDU sets and the second parameter, to enable or disable retransmission of the part or all of the data packets of the one or more PDU sets.

In a possible implementation, the second parameter indicates the access network device to determine, based on the maximum number of lost packets or the maximum packet loss ratio of the one or more PDU sets, to enable or disable retransmission of the part or all of the data packets of the one or more PDU sets. When a maximum number of lost packets or a maximum packet loss ratio of the first PDU set is less than or equal to the second parameter, the access network device determines to disable retransmission of the part or all of the data packets of the first PDU set; or when a maximum number of lost packets or a maximum packet loss ratio of the first PDU set is greater than the second parameter, the access network device determines to enable retransmission of the part or all of the data packets of the first PDU set, where the first PDU set belongs to the one or more PDU sets.

Optionally, the second parameter further indicates the access network device to enable (or determine) the acknowledged mode of the data packet of the one or more PDU sets. Correspondingly, after the access network device determines, from the one or more PDU sets based on the second parameter, a PDU set for which retransmission of a part or all of the data packets needs to be disabled, for example, the access network device determines that retransmission of the part or all of the data packets of the first PDU set needs to be disabled. The access network device enables the AM mode of the data packet of the first PDU set, and the access network device indicates that the terminal device needs to feed back the indication information of the ACK of the data packet of the first PDU set and/or the indication information of the negative acknowledgment NACK of the data packet of the first PDU set.

For example, the second parameter is forward error correction content ratio FEC content ratio information.

The application function sends the first information to the access network device. Specifically, the application function sends the first information to the access network device via signaling or a message. For example, the application function directly sends signaling or a message to the access network device, and the signaling or the message carries the first information. For another example, the application function sends signaling or a message to the access network device through another network function (or network element), and the signaling or the message carries the first information.

Further, there are a plurality of possible implementations of an association manner between the first information and the one or more PDU sets, for example, any one or more of the following manner 1 to manner 3.

Manner 1: The first information carries the identification information of the one or more PDU sets. The identification information of the one or more PDU sets is, for example, a PDU set sequence number (PDU Set Sequence Number) of the one or more PDU sets.

Manner 2: The first information is carried in PDU set information (PDU set information) of the one or more PDU sets.

Manner 3: The first information is carried in a QoS parameter (QoS parameter) of a PDU set, and the QoS parameter of the PDU set corresponds to the first QoS flow. In other words, the first information is associated with the first QoS flow. The first QoS flow is used to transmit the one or more PDU sets. Further, that the first QoS flow is used to transmit the one or more PDU sets may also be referred to as that the first QoS flow is used to carry the data packet of the one or more PDU sets.

It should be noted that the first PDU set in this embodiment of this application includes at least one PDU set. For example, the first PDU set may include a plurality of PDU sets.

S1b: A user plane function sends first information to an access network device, where the first information is used to enable the access network device to determine a retransmission mechanism of one or more protocol data unit sets PDU SET.

Specifically, step S1b and step S1a are parallel to each other. For example, when step S1a is performed, step S1b is not performed; or when step S1b is performed, step S1a is not performed. For another example, step S1a may be performed before step S1b, and in step S2, the access network device determines the retransmission mechanism of the part or all of the data packets of the one or more PDU sets based on the first information in step S1b. Alternatively, step S1b may be performed before step S1a, and in step S2, the access network device determines the retransmission mechanism of the part or all of the data packets of the one or more PDU sets based on the first information in step S1a.

The first information in step S1b is consistent with the first information in step S1a, and details are not described herein again.

The following describes how the user plane function sends the first information to the access network device. Specifically, the user plane function sends the first information in-stream in the data packet of the one or more PDU sets to the access network device.

In a possible implementation, the user plane function sends the data packet of the one or more PDU sets to the access network device on a first path, and the user plane function sends the PDU set information of the one or more PDU sets to the access network device on the first path, where the PDU set information includes the first information.

In another possible implementation, a header of the data packet of the one or more PDU sets carries the first information. For example, a GTP-U packet header of the data packet of the first PDU set carries the first information, and the first PDU set belongs to the one or more PDU sets.

It should be noted that, because service requirements of different PDU sets may be different, and setting parameters of error correction modes of different PDU sets may also be different, different information may be set for different PDU sets to determine a retransmission mechanism of a part or all of data packets of the PDU set. For example, for the PDU set #1, first information #1 may be used, and the first information #1 is used to determine a retransmission mechanism of a part or all of data packets of the PDU set #1; and for the PDU set #2, the first information #2 may be used, and the first information #2 is used to determine a retransmission mechanism of a part or all of data packets of the PDU set #2. A header of a data packet of a PDU set sent by the UPF to the RAN carries corresponding information. For example, a header of the data packet of the PDU set #1 sent by the UPF carries the first information #1, a header of the data packet of the PDU set #2 sent by the UPF carries the first information #2, and a header of a data packet of a PDU set #3 sent by the UPF carries first information #3. The rest may be deduced by analogy. The first information #1, the first information #2, and the first information #3 may be different.

It should be noted that, with a change of a service or based on a user setting, the first information may also change (or be updated). For example, the first information includes the first parameter, the first parameter included in the first information is 2 in a first time period, and the first parameter included in the first information is 3 in a second time period. For another example, the first information includes the first indication information in the first time period, and the first information includes the first parameter in the second time period.

S2: The access network device disables retransmission of the part or all of the data packets of the first PDU set based on the first information.

In step S2, after receiving the first information, the access network device determines the retransmission mechanism of the part or all of the data packets of the one or more PDU sets based on the first information. Then, the access network device determines, from the one or more PDU sets, a PDU set for which retransmission of a part or all of data packets needs to be disabled, and the PDU set for which retransmission of the part or all of the data packets needs to be disabled is referred to as the first PDU set, that is, the access network device determines the first PDU set. The access network device disables retransmission of the part or all of the data packets of the first PDU set based on the first information, where the first PDU set belongs to the one or more PDU sets.

Because the first information specifically has the plurality of possible implementations, correspondingly, there are a plurality of possible implementations in which the access network device disables retransmission of the part or all of the data packets of the first PDU set based on the first information, for example, any one or more of the following Manner 1 to Manner 3.

Manner 1: The first information includes the first indication information, and the first indication information is used to enable the access network device to determine that the retransmission mechanism of the one or more PDU sets is: enabling the access network device to enable the unacknowledged mode (unacknowledged mode, UM) of the data packet of the one or more PDU sets, and/or disable retransmission of the part or all of the data packets of the one or more PDU sets.

In this embodiment of this application, that the access network device disables retransmission of the part or all of the data packets of the one or more PDU sets also means that the access network device does not retransmit the part or all of the data packets of the one or more PDU sets.

The access network device determines the first PDU set from the one or more PDU sets corresponding to the first indication information based on the first indication information. Then, the access network device enables the UM mode of the data packet of the first PDU set, and the access network device indicates that the terminal device does not need to feed back the indication information of the acknowledgment of the data packet of the first PDU set and/or the indication information of the negative acknowledgment of the data packet of the first PDU set. It should be noted that the first PDU set may be any one or more PDU sets in the one or more PDU sets. Alternatively, the first PDU set includes the one or more PDU sets corresponding to the first indication information.

Further, based on the first indication information, the access network device disables an automatic repeat request for the part or all of the data packets of the first PDU set.

Further, when the first indication information is used to enable the access network device to disable retransmission of a part of the data packets of the first PDU set, correspondingly, the access network device enables retransmission of a part of the data packets of the first PDU set. Specifically, the access network device enables retransmission of a part that is of the data packets of the first PDU set and whose status report is NACK.

In a possible example, for example, FIG. 8 is a diagram of a transmission procedure of the first indication information according to an embodiment of this application. After the RRC layer of the access network device receives the first indication information, the RRC layer of the access network device sends the first indication information to the RLC layer of the access network device. The RRC layer of the access network device indicates the RLC layer to enable the UM mode of the data packet of the first PDU set indicated by the first indication information. The RRC layer indicates the RLC layer to disable ARQ retransmission of the part or all of the data packets of the first PDU set.

Manner 2: The first information includes the first parameter, and the first parameter indicates the access network device to determine that the retransmission mechanism of the one or more PDU sets is: enabling the access network device to determine, based on a maximum number of consecutive lost packets of the one or more PDU sets and the first parameter, to enable or disable retransmission of the part or all of the data packets of the one or more PDU sets.

First, the access network device determines the maximum number of consecutive lost packets of the one or more PDU sets. Then, the access network device determines the first PDU set based on the maximum number of consecutive lost packets of the one or more PDU sets and a maximum number of consecutive lost packets of one PDU set indicated by the first parameter, where the first PDU set meets that the maximum number of consecutive lost packets of the first PDU set is less than or equal to the first parameter. The access network device determines to disable retransmission of the part or all of the data packets of the first PDU set.

Alternatively, when a maximum number of consecutive lost packets of a second PDU set of the one or more PDU sets is greater than the first parameter, the access network device determines to enable retransmission of a part or all of data packets of the second PDU set, where the second PDU set belongs to the one or more PDU sets, and the second PDU set includes at least one PDU set.

Optionally, the first parameter further indicates the access network device to enable (or determine) an acknowledged mode (acknowledged mode, AM) related to the data packet of the one or more PDU sets. Correspondingly, the access network device enables the AM mode of the data packet of the first PDU set based on the first parameter, and the access network device indicates that the terminal device needs to feed back the indication information of the ACK of the data packet of the first PDU set and/or the indication information of the negative acknowledgment NACK of the data packet of the first PDU set.

For example, when the first parameter indicates that a maximum number of consecutive lost packets of one PDU set is 2, and the maximum number of consecutive lost packets of the first PDU set is 3, the access network device needs to enable retransmission of the part or all of the data packets of the first PDU set. For example, the first PDU set includes the data packet 0, the data packet 1, the data packet 2, the data packet 3, the data packet 4, the data packet 5, the data packet 6, and the data packet 7. The access network device determines that in the transmission process, the data packet 2, the data packet 3, and the data packet 4 of the first PDU set are lost. The access network device may retransmit any one or more of the data packet 2, the data packet 3, and the data packet 4 of the first PDU set. The access network device may alternatively retransmit all the data packets of the first PDU set.

Manner 3: The first information includes the second parameter, and that the second parameter indicates the access network device to determine the retransmission mechanism of the one or more PDU sets includes: The second parameter indicates the access network device to determine, based on the maximum number of lost packets or the maximum packet loss ratio of the one or more PDU sets, to enable or disable retransmission of the part or all of the data packets of the one or more PDU sets.

First, the access network device determines the maximum number of lost packets or the maximum packet loss ratio of the one or more PDU sets. Second, the access network device determines the first PDU set based on the maximum number of lost packets or the maximum packet loss ratio of the one or more PDU sets and a maximum number of lost packets or a maximum packet loss ratio of one PDU set indicated by the second parameter, where the first PDU set meets: The maximum number of lost packets or the maximum packet loss ratio of the first PDU set is less than or equal to the second parameter. Then, the access network device determines to disable retransmission of the part or all of the data packets of the first PDU set.

Alternatively, when a maximum number of lost packets or a maximum packet loss ratio of the second PDU set of the one or more PDU sets is greater than the second parameter, the access network device determines to enable retransmission of the part or all of the data packets of the second PDU set, where the second PDU set belongs to the one or more PDU sets, and the second PDU set includes at least one PDU set.

Optionally, the second parameter further indicates the access network device to enable (or determine) the acknowledged mode of the data packet of the one or more PDU sets. Correspondingly, the access network device enables the AM mode of the data packet of the first PDU set based on the second parameter, and the access network device indicates that the terminal device needs to feed back the indication information of the ACK of the data packet of the first PDU set and/or the indication information of the negative acknowledgment NACK of the data packet of the first PDU set.

For example, when the second parameter indicates that a maximum number of lost packets of one PDU set is 2, and the maximum number of lost packets of the first PDU set is 3, the access network device needs to enable retransmission of the part or all of the data packets of the first PDU set. For example, the first PDU set includes the data packet 0, the data packet 1, the data packet 2, the data packet 3, the data packet 4, the data packet 5, the data packet 6, and the data packet 7. The access network device determines that in the transmission process, the data packet 1, the data packet 3, and the data packet 5 of the first PDU set are lost. The access network device may retransmit any one or more of the data packet 1, the data packet 3, and the data packet 5 of the first PDU set. The access network device may alternatively retransmit all the data packets of the first PDU set.

Optionally, when determining the retransmission mechanism of the part or all of the data packets of the first PDU set, the access network device considers a packet delay budget (PDU Set delay budget, PSDB) of the first PDU set. Specifically, the access network device obtains a transmission delay requirement of the terminal device. If the transmission delay requirement is less than the PSDB of the first PDU set, the access network device determines, based on the maximum number of consecutive lost packets of the first PDU set and the first parameter, to enable retransmission of the part or all of the data packets of the first PDU set; or if the transmission delay requirement is greater than or equal to the PSDB of the first PDU set, the access network device determines to disable retransmission of the part or all of the data packets of the first PDU set.

For example, the access network device obtains a first transmission delay between the access network device and the terminal device. The access network device detects whether a sum of the first transmission delay and a second transmission delay is less than the packet delay budget PSDB of the first PDU set. If the sum of the first transmission delay and the second transmission delay is less than the PSDB of the first PDU set, the access network device determines, based on the maximum number of consecutive lost packets of the first PDU set and the first parameter, to enable or disable retransmission of the part or all of the data packets of the first PDU set, where the second transmission delay is a transmission delay between the user plane function and the access network device. If the sum of the first transmission delay and the second transmission delay is greater than the PSDB of the first PDU set, the access network device determines to disable retransmission of the part or all of the data packets of the first PDU set. According to the foregoing method, the access network device does not need to retransmit a data packet of a PDU set whose PSDB times out, to save transmission resources and improve a data throughput.

In this embodiment of this application, the access network device determines the retransmission mechanism of the data packet of the one or more PDU sets based on the first information. The access network device determines, based on the first information, to disable retransmission of the part or all of the data packets of the first PDU set, so that a delay can be reduced, and the first PDU set belongs to the one or more PDU sets. In addition, on a premise that the error correction mode is enabled for the part or all of the data packets of the one or more PDU sets, the access network device disables, based on the first information, the retransmission mechanism of the part or all of the data packets of the first PDU set. On a premise of ensuring data transmission reliability, disabling retransmission of a part of the data packets of the first PDU set can reduce a delay and improve a data throughput.

With reference to the foregoing embodiment, the following further describes how the access network device determines the retransmission mechanism of the part or all of the data packets in the one or more PDU sets. The first PDU set of the one or more PDU sets is used as an example for description. In a possible implementation, if the first information in this embodiment is carried in a QoS parameter (QoS parameter) of a PDU set, the QoS parameter of the PDU set corresponds to the first QoS flow. Possibly, any one or more PDU sets transmitted in the first QoS flow meet a retransmission mechanism in which the first PDU set is used as an example.

First, how the access network device determines the maximum number of consecutive lost packets of the first PDU set, the maximum number of lost packets of the first PDU set, and/or the maximum packet loss ratio of the first PDU set is described. FIG. 6 is a schematic flowchart of another embodiment of a protocol data unit-based communication method according to an embodiment of this application. The protocol data unit-based communication method provided in this embodiment of this application further includes the following content.

D1: An access network device receives a status report of a terminal device.

In step D1, the access network device receives (or obtains) the status report of the terminal device, where the status report of the terminal device includes a first sequence number of a data packet sent by the access network device, indication information of an acknowledgment ACK of the data packet sent by the access network device, and/or indication information of a negative acknowledgment NACK of the data packet sent by the access network device. The data packet sent by the access network device is a data packet sent by the access network device to the terminal device. In a process of sending the data packet to the terminal device, the access network device allocates a sequence number to each data packet, and the sequence number is referred to as the first sequence number. The data packet sent by the access network device includes a data packet of one or more PDU sets.

In a process of communication between the terminal device and the access network device, the terminal device reports, to the access network device, a receiving status of each data packet. For example, if the terminal device successfully receives a data packet 1, the terminal device reports, to the access network device, a first sequence number of the data packet 1 and indication information of an acknowledgment of the data packet. For another example, if the terminal device fails to receive a data packet 2 (for example, the terminal device does not receive the data packet 2), the terminal device reports, to the access network device, a first sequence number of the data packet 2 and indication information of a negative acknowledgment of the data packet.

In a possible implementation, the terminal device sends the status report of the terminal device to the access network device in response to a request of the access network device.

In another possible implementation, the terminal device sends the status report of the terminal device to the access network device based on first information (for example, a first parameter and/or a second parameter included in the first information).

D2: The access network device determines a transmission status of the first PDU set based on the status report of the terminal device.

In step D2, the access network device determines, based on the status report of the terminal device, a PDU set corresponding to each data packet, and further determines a transmission status of the PDU set. For example, the first PDU set is used as an example. The access network device determines, from the status report of the terminal device based on the status report of the terminal device, indication information of an acknowledgment and/or indication information of a negative acknowledgment of a data packet of the first PDU set. Then, the indication information of the acknowledgment and/or the indication information of the negative acknowledgment of the data packet of the first PDU set are/is used as the transmission status of the first PDU set.

In a possible implementation, the access network device finds, based on the first sequence number of the data packet, PDU set information (PDU set information) corresponding to the data packet. Then, the access network device determines, based on the PDU set information, a PDU set corresponding to the PDU set information. The access network device detects whether the data packet belongs to a data packet of the PDU set. If it is determined that the data packet belongs to the PDU set, the access network device marks, based on indication information of an acknowledgment or indication information of a negative acknowledgment of the data packet, whether the data packet of the PDU set is successfully transmitted. If the data packet is successfully transmitted, the data packet of the PDU set is marked as an acknowledgment. If the data packet is lost (transmission fails), the data packet of the PDU set is marked as a negative acknowledgment. The access network device determines a transmission status of the PDU set based on indication information of an acknowledgment or indication information of a negative acknowledgment of each data packet of the PDU set.

D3: The access network device determines a maximum number of consecutive lost packets of the first PDU set, a maximum number of lost packets of the first PDU set, and/or a maximum packet loss ratio of the first PDU set based on the transmission status of the first PDU set.

In step D3, the access network device determines, based on the transmission status of the first PDU set, one or any combination of the following information: the maximum number of consecutive lost packets of the first PDU set, the maximum number of lost packets of the first PDU set, or the maximum packet loss ratio of the first PDU set.

For example, the first PDU set includes a data packet 0, a data packet 1, a data packet 2, a data packet 3, a data packet 4, a data packet 5, and a data packet 6. In this case, the transmission status of the first PDU set indicates: the data packet 0: ACK, the data packet 1: NACK, the data packet 2: NACK, the data packet 3: ACK, the data packet 4: NACK, the data packet 5: ACK, and the data packet 6: ACK. In this case, the maximum number of consecutive lost packets of the first PDU set is 2.

For example, the first PDU set includes a data packet 0, a data packet 1, a data packet 2, a data packet 3, a data packet 4, a data packet 5, and a data packet 6. In this case, the transmission status of the first PDU set indicates: the data packet 0: ACK, the data packet 1: NACK, the data packet 2: NACK, the data packet 3: ACK, the data packet 4: NACK, the data packet 5: ACK, and the data packet 6: ACK. In this case, the maximum number of lost packets of the first PDU set is 3.

For example, the first PDU set includes a data packet 0, a data packet 1, a data packet 2, a data packet 3, a data packet 4, a data packet 5, and a data packet 6. In this case, the transmission status of the first PDU set indicates: the data packet 0: ACK, the data packet 1: NACK, the data packet 2: NACK, the data packet 3: ACK, the data packet 4: NACK, the data packet 5: ACK, and the data packet 6: ACK. In this case, the maximum packet loss ratio of the first PDU set is 3/7.

Then, how the access network device determines, based on the maximum number of consecutive lost packets of the first PDU set, the maximum number of lost packets of the first PDU set, and/or the maximum packet loss ratio of the first PDU set, to disable retransmission of a part or all of data packets of the first PDU set is described. FIG. 7 is a schematic flowchart of another embodiment of a protocol data unit-based communication method according to an embodiment of this application. The protocol data unit-based communication method provided in this embodiment of this application further includes the following content.

F1: An access network device obtains a maximum number of consecutive lost packets of a first PDU set, a maximum number of lost packets of the first PDU set, and/or a maximum packet loss ratio of the first PDU set.

Step F1 is consistent with step D1 to step D3, and details are not described herein again.

F2: The access network device obtains first information.

Step F2 is consistent with step S1a and step S1b, and details are not described herein again.

F3: The access network device disables retransmission of a part or all of data packets of the first PDU set based on the first information, and the maximum number of consecutive lost packets of the first PDU set, the maximum number of lost packets of the first PDU set, and/or the maximum packet loss ratio of the first PDU set.

Step F3 is consistent with step S2, and details are not described herein again.

Further, optionally, when a service requirement of the first PDU set changes, the access network device may obtain updated first information corresponding to the first PDU set. The access network device may enable retransmission of the part or all of the data packets of the first PDU set based on the transmission status of the first PDU set and the updated first information.

With reference to the foregoing embodiments, the following describes how to determine, between layers of the access network device, to disable retransmission of the part or all of the data packets of the first PDU set.

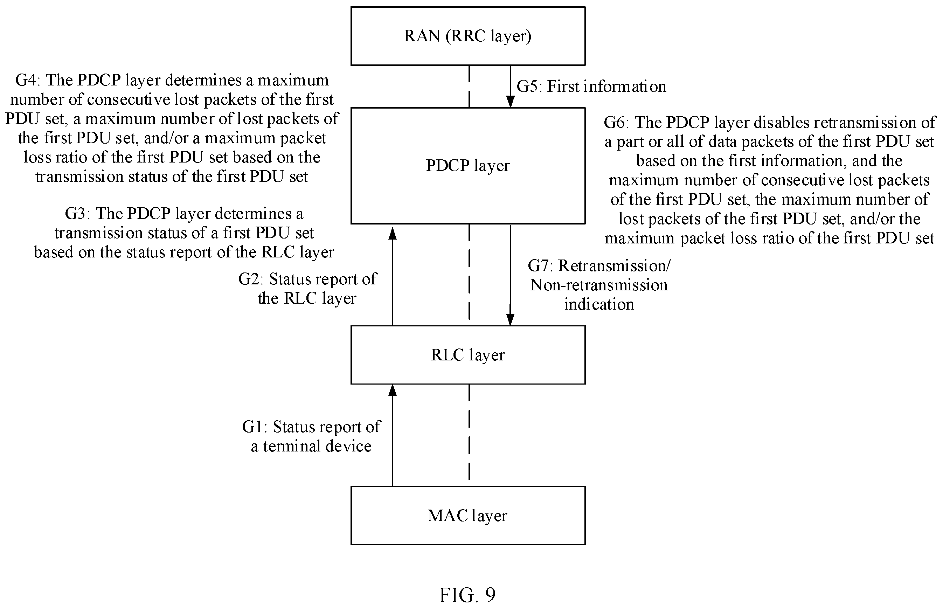

First, the PDCP layer of the access network device determines retransmission of the part or all of the data packets of the first PDU set. FIG. 9 is a schematic flowchart of determining a retransmission mechanism of a part or all of data packets of a first PDU set according to an embodiment of this application. The protocol data unit-based communication method provided in this embodiment of this application specifically includes the following content.

G1: An RLC layer receives a status report of a terminal device.

In step G1, the RLC layer of the access network device receives the status report of the terminal device. The RLC layer determines, based on the status report of the terminal device, an ACK status and/or a NACK status of a data packet received by the terminal device.

G2: The RLC layer sends a status report of the RLC layer to a PDCP layer.

In step G2, the RLC layer of the access network device sends the status report of the RLC layer to the PDCP layer based on the status report of the terminal device. There are a plurality of possible implementations of the status report of the RLC layer. For example, the status report of the RLC layer is specific to only a lost data packet of the terminal device. For another example, the status report of the RLC layer is specific to only a successfully transmitted data packet of the terminal device. For another example, the status report of the RLC layer is specific to both a successfully transmitted data packet and a lost data packet of the terminal device.

G3: The PDCP layer determines a transmission status of a first PDU set based on the status report of the RLC layer.

In step G3, the PDCP layer of the access network device determines the transmission status of the first PDU set based on the status report from the RCL layer.

Specifically, the PDCP layer finds, based on a first sequence number of a data packet fed back by the RLC layer, PDU set information corresponding to the data packet, and further determines a PDU set to which the data packet belongs. The PDCP layer determines, based on indication information of an ACK or indication information of a NACK of the data packet, whether the data packet of the PDU set is lost. Finally, a transmission status of the PDU set is further determined based on a packet loss status of all data packets in the PDU set. For example, the transmission status of the first PDU set indicates indication information of an ACK or indication information of a NACK of a part or all of data packets of the first PDU set.

G4: The PDCP layer determines a maximum number of consecutive lost packets of the first PDU set, a maximum number of lost packets of the first PDU set, and/or a maximum packet loss ratio of the first PDU set based on the transmission status of the first PDU set.

In step G4, the PDCP layer determines a packet loss status of each data packet of the first PDU set based on the transmission status of the first PDU set. Further, the maximum number of consecutive lost packets of the first PDU set, the maximum number of lost packets of the first PDU set, and/or the maximum packet loss ratio of the first PDU set are determined.

G5: An RRC layer sends first information to the PDCP layer.

In step G5, after the RRC layer of the access network device obtains the first information, the RRC layer sends the first information to the PDCP layer. For example, the RRC layer sends signaling or a message to the PDCP layer, and the signaling or the message includes the first information. The first information is consistent with that in step S1a or step S1b, and details are not described herein again.

It should be noted that an execution sequence of step G5 and step G1 to step G4 is not limited herein. Step G5 may be performed before step G1 to step G4, or step G5 may be performed in a process of performing step G1 to step G4.

G6: The PDCP layer enables or disables retransmission of the part or all of the data packets of the first PDU set based on the first information, and the maximum number of consecutive lost packets of the first PDU set, the maximum number of lost packets of the first PDU set, and/or the maximum packet loss ratio of the first PDU set.

In a possible example of step G6, the method includes: The PDCP layer of the access network device obtains the maximum number of consecutive lost packets of the first PDU set; the PDCP layer of the access network device receives a first parameter, and optionally, the PDCP layer of the access network device receives the first parameter from the RRC layer of the access network device; and the PDCP layer of the access network device enables or disables retransmission of the part or all of the data packets of the first PDU set based on the maximum number of consecutive lost packets of the first PDU set and the first parameter.

In another possible example, the method includes: The PDCP layer of the access network device obtains the maximum number of lost packets or the maximum packet loss ratio of the first PDU set; the PDCP layer of the access network device receives a second parameter, and optionally, the PDCP layer of the access network device receives the second parameter from the RRC layer of the access network device; and the PDCP layer of the access network device enables or disables retransmission of the part or all of the data packets of the first PDU set based on the maximum number of lost packets or the maximum packet loss ratio of the first PDU set and the second parameter.

A specific method is consistent with the method shown in step S2, and details are not described herein again.

Optionally, the PDCP layer of the access network device determines an ACK data packet of the first PDU set based on the transmission status of the first PDU set, where the ACK data packet of the first PDU set indicates a data packet that is of the first PDU set and that is successfully received by the terminal device; and the PDCP layer of the access network device determines, based on the ACK data packet of the first PDU set, whether to release the part or all of the data packets of the first PDU set in a buffer of the access network device.

Specifically, when a number of ACK data packets of the first PDU set is greater than a number of successfully transmitted data packets of the first PDU set indicated by the first information, the PDCP layer of the access network device determines to release the part or all of the data packets of the first PDU set in the buffer of the access network device; or when a number of ACK data packets of the first PDU set is less than or equal to a number of successfully transmitted data packets of the first PDU set indicated by the first information, the PDCP layer of the access network device indicates the RLC layer of the access network device to retransmit the part or all of the data packets of the first PDU set to the terminal device. According to the foregoing method, a storage space of the access network device is saved while reliable data transmission is ensured.

G7: The PDCP layer sends a retransmission/non-retransmission indication of the data packet of the first PDU set to the RLC layer.

In a possible implementation of step G7, after the PDCP layer determines to disable retransmission of the part or all of the data packets of the first PDU set, the PDCP layer determines a data packet that is of the first PDU set and whose retransmission needs to be disabled, and then the PDCP layer sends, to the RLC layer, a non-retransmission indication of the data packet that is of the first PDU set and whose retransmission needs to be disabled. In a possible implementation, the PDCP layer sends, to the RLC layer, the non-retransmission indication and a first sequence number of the data packet that is of the first PDU set and whose retransmission needs to be disabled. The RLC layer disables retransmission of the corresponding data packet based on the non-retransmission indication. The access network device does not send the data packet corresponding to the non-retransmission indication.

In another possible implementation, after the PDCP layer determines to disable retransmission of the part or all of the data packets of the first PDU set, the PDCP layer determines a data packet that is of the first PDU set and whose retransmission does not need to be disabled, and then the PDCP layer sends, to the RLC layer, a retransmission indication of the data packet that is of the first PDU set and whose retransmission still needs to be performed. In a possible implementation, the PDCP layer sends, to the RLC layer, the retransmission indication and a first sequence number of the data packet that is of the first PDU set and whose retransmission needs to be disabled. The RLC layer retransmits the corresponding data packet based on the retransmission indication. The RLC layer perform disabling retransmission processing on another data packet that is of the first PDU set and for which no retransmission indication is received. The access network device sends the data packet corresponding to the retransmission indication, and the access network device does not send the another data packet that is of the first PDU set and for which no retransmission indication is received by the RLC layer.

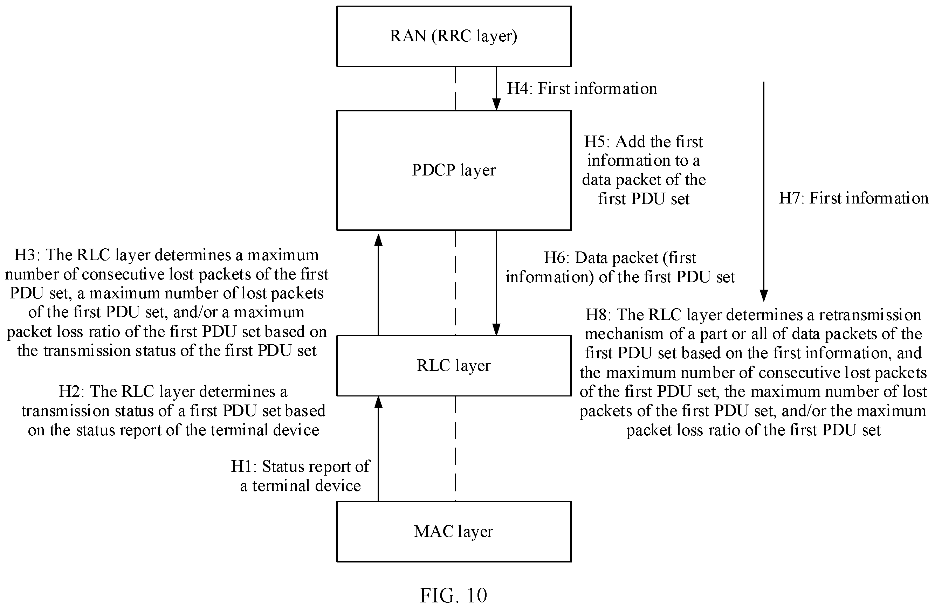

Then, that the RLC layer of the access network device determines retransmission of the part or all of the data packets of the first PDU set is described. FIG. 10 is a schematic flowchart of determining a retransmission mechanism of a part or all of data packets of a first PDU set according to an embodiment of this application. The protocol data unit-based communication method provided in this embodiment of this application specifically includes the following content.

H1: An RLC layer obtains a status report of a terminal device.

Step H1 is consistent with step G1, and details are not described herein again.

H2: The RLC layer determines a transmission status of a first PDU set based on the status report of the terminal device.

In step H2, the RLC layer of the access network device generates a status report of the RLC layer based on indication information of an ACK and/or indication information of a NACK of a data packet of each PDU set. There are a plurality of possible implementations of the status report of the RLC layer. For example, the status report of the RLC layer is specific to only a lost data packet of the terminal device. For another example, the status report of the RLC layer is specific to only a successfully transmitted data packet of the terminal device. For another example, the status report of the RLC layer is specific to both a successfully transmitted data packet and a lost data packet of the terminal device.

Then, the RLC layer determines the transmission status of the first PDU set based on the status report of the RCL layer. Specifically, the RLC layer finds, based on a first sequence number of a data packet, PDU set information corresponding to the data packet, and further determines a PDU set to which the data packet belongs. The RLC layer determines, based on indication information of an ACK or indication information of a NACK of the data packet, whether the data packet of the PDU set is lost. Finally, a transmission status of the PDU set is further determined based on a packet loss status of all data packets in the PDU set. For example, the transmission status of the first PDU set indicates indication information of an ACK or indication information of a NACK of a part or all of data packets of the first PDU set.

H3: The RLC layer determines a maximum number of consecutive lost packets of the first PDU set, a maximum number of lost packets of the first PDU set, and/or a maximum packet loss ratio of the first PDU set based on the transmission status of the first PDU set.

In step H3, the RLC layer determines a packet loss status of each data packet of the first PDU set based on the transmission status of the first PDU set. Further, the maximum number of consecutive lost packets of the first PDU set, the maximum number of lost packets of the first PDU set, and/or the maximum packet loss ratio of the first PDU set are determined.

There are a plurality of manners of obtaining first information by the RLC layer. Manner 1 is described in step H4 to step H6. Manner 2 is described in step H7. The following separately describes the manners.

H4: An RRC layer sends the first information to a PDCP layer.

In step H4, after the RRC layer of the access network device obtains the first information, the RRC layer sends the first information to the PDCP layer. The first information is consistent with that in step S1a or step S1b, and details are not described herein again.

H5: The PDCP layer adds the first information to a data packet of the first PDU set.

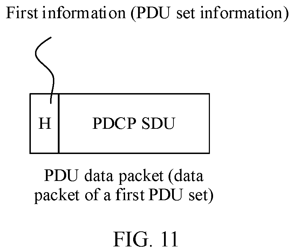

In step H5, optionally, after the PDCP layer receives the first information, to transfer the first information to the RLC layer, the PDCP layer adds the first information to a header of the data packet of the first PDU set. In a possible example, the PDCP layer adds the first information to a PDCP SDU data packet header of the data packet of the first PDU set. For ease of understanding, refer to FIG. 11. FIG. 11 is a diagram of a structure of a data packet of a first PDU set according to an embodiment of this application. The PDCP SDU packet header (that is, a data packet header of a PDCP SDU data packet) of the data packet of the first PDU set carries the first information. After receiving the data packet of the first PDU set transferred by an upper layer (for example, an SDAP layer or the RRC layer), the PDCP layer adds the PDCP SDU header to the data packet of the first PDU set at the PDCP layer, and uses the data packet of the first PDU set transferred by the upper layer as a PDCP SDU at the PDCP layer. The PDCP layer adds the first information to the PDCP SDU packet header of the data packet of the first PDU set. Then, the data packet of the first PDU set to which the first information is added is transmitted to the RLC layer.

Optionally, the header of the data packet of the first PDU set may carry PDU set information (PDU SET information) of the first PDU set. For example, the PDCP SDU header of the data packet of the first PDU set carries the PDU set information of the first PDU set.

H6: The PDCP layer sends the data packet of the first PDU set to the RLC layer.

H7: The RRC layer sends the first information to the RLC layer.

In step H7, after the RRC layer of the access network device obtains the first information, the RRC layer sends the first information to the RLC layer. For example, the RRC layer sends signaling or a message to the RLC layer, and the signaling or the message includes the first information. The first information is consistent with that in step S1a or step S1b, and details are not described herein again.

H8: The RLC layer determines a retransmission mechanism of a part or all of data packets of the first PDU set based on the first information, and the maximum number of consecutive lost packets of the first PDU set, the maximum number of lost packets of the first PDU set, and/or the maximum packet loss ratio of the first PDU set.

In a possible implementation of step H8, the RLC layer of the access network device obtains the maximum number of consecutive lost packets of the first PDU set; the RLC layer of the access network device obtains a first parameter; and the RLC layer of the access network device determines, based on the maximum number of consecutive lost packets of the first PDU set and the first parameter, to disable retransmission of the part or all of the data packets of the first PDU set.

In another possible implementation, the RLC layer of the access network device obtains the maximum number of lost packets or the maximum packet loss ratio of the first PDU set; the RLC layer of the access network device obtains a second parameter; and the RLC layer of the access network device determines, based on the maximum number of lost packets or the maximum packet loss ratio of the first PDU set and the second parameter, to disable retransmission of the part or all of the data packets of the first PDU set.

After determining data packets whose retransmission needs to be disabled, the RLC layer disables retransmission of the data packets. After determining data packets whose retransmission needs to be enabled, the RLC layer sends the data packets that need to be retransmitted.

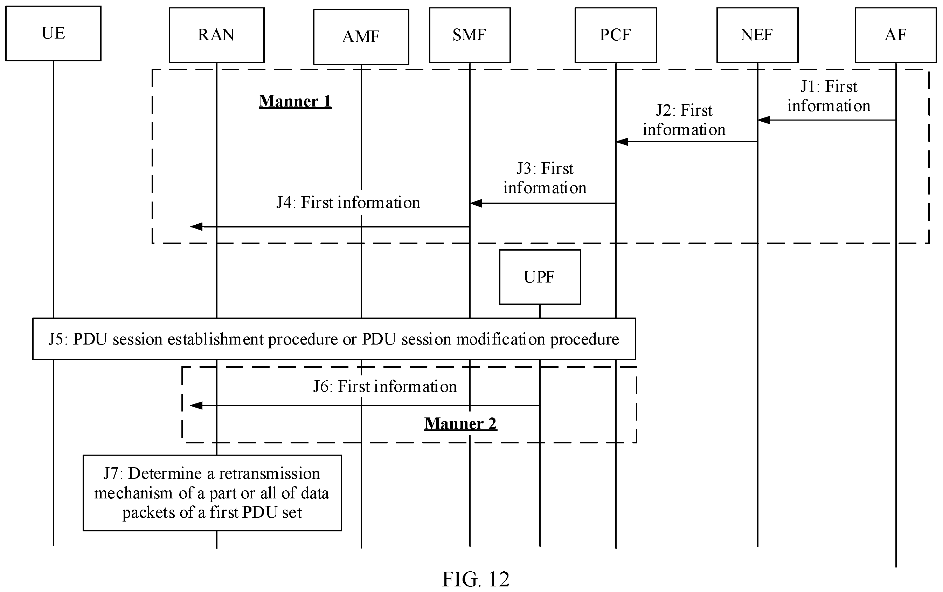

With reference to the foregoing embodiments, the following describes an application scenario provided in embodiments of this application. FIG. 12 is a schematic flowchart of an application scenario according to an embodiment of this application. An application scenario provided in this embodiment of this application includes the following content.

J1: An AF sends first information to an NEF.

In step J1, the AF sends, to the NEF, a "Nnef_AFsessionWithQoS Create request" message carrying the first information. The "Nnef_AFsessionWithQoS Create request" is merely an example of sending the first message. In a possible manner, the first information may alternatively be carried in a "Nnef_AFsessionWithQoS update request" message. The following embodiment is described based on the "Nnef_AFsessionWithQoS Create request" message.

J2: The NEF sends the first information to a PCF.

In step J2, the NEF performs an authorization (authorization) operation based on the "Nnef_AFsessionWithQoS Create request" message. After successful authorization, the NEF sends the first information to the PCF. For example, the NEF sends a "Npcf_PolicyAuthorization Create request" to the PCF, and the "Npcf_PolicyAuthorization Create request" message carries the first information.

J3: The PCF sends the first information to an SMF.

In step J3, the PCF generates a corresponding PCC rule based on the "Npcf_PolicyAuthorization Create request" message, and then the PCF sends the first information to the SMF. For example, the PCF sends an "SM Policy Association Establishment" message to the SMF, where the message carries the first information.

J4: The SMF sends the first information to a RAN.

In step J4, in response to the "SM Policy Association Establishment" message, the SMF sends the first information to the RAN through an AMF. For example, the AMF sends an "N2 message" message to the RAN, where the message carries the first information.

J5: PDU session establishment procedure or PDU session modification procedure.

J6: A UPF sends the first information to the RAN.

After step J5 and before step J6, the UPF inserts the first information into a data packet of one or more PDU sets, where the first information indicates a retransmission mechanism of the one or more PDU sets. The UPF sends the data packet of the one or more PDU sets to the RAN.

J7: The RAN determines to disable retransmission of a part or all of data packets of a first PDU set.

Step J7 is consistent with step S2, and details are not described herein again.

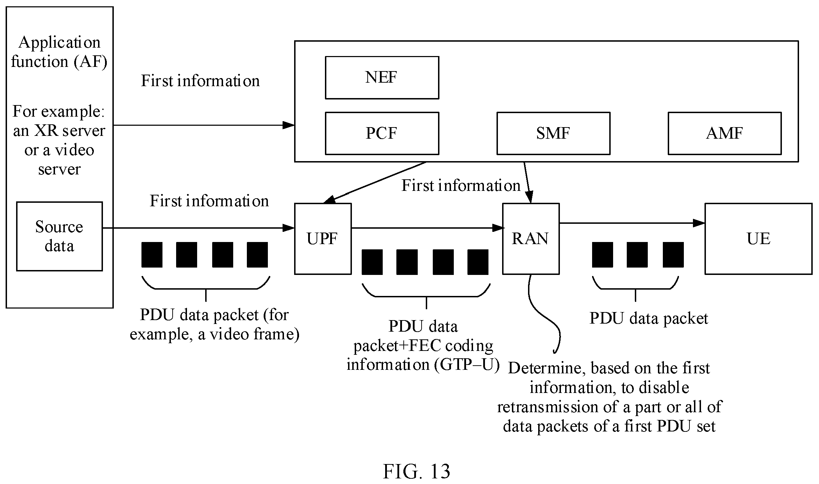

Another possible application scenario is shown in FIG. 13. An AF allocates first information to a PDU set corresponding to a service based on a service requirement. For example, an XR service or a video service is sensitive to a delay. Therefore, the AF may allocate the first information to one or more PDU sets within a QoS flow that carries the XR service or the video service, data included in the one or more PDU sets may be a video frame, and the first information indicates a retransmission mechanism of a data packet of the one or more PDU sets. The AF sends the first information to another network function (including but not limited to an NEF, a PCF, an SMF, or an AMF), or the AF may send the first information to a UPF in-stream (in a data flow of the PDU SET). The RAN obtains the first information in-stream or obtains the first information from another network function. Then, the RAN determines, based on the first information, a retransmission mechanism of a part or all of data packets of the one or more PDU sets. For example, the RAN determines, based on the first information, to disable retransmission of a part or all of data packets of a first PDU set, where the first PDU set belongs to the one or more PDU sets. According to the foregoing method, a delay requirement of an XR service or a video service is met, and a delay is reduced while reliable data transmission is ensured.

The foregoing describes this application from a perspective of the method, and the following further describes other embodiments provided in this application.

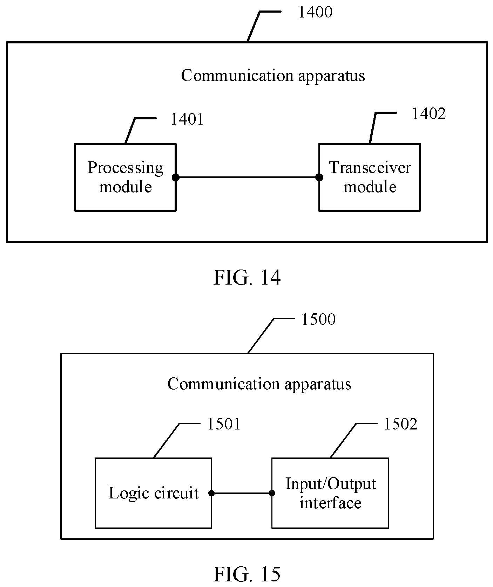

FIG. 14 is a diagram of an implementation of a communication apparatus according to this application. The communication apparatus 1400 includes a processing module 1401 and a transceiver module 1402. The communication apparatus 1400 may implement functions of the communication apparatus (including an AF, a UPF, a RAN, and/or the like) in the foregoing method embodiments, and therefore can also implement beneficial effects of the foregoing method embodiments. In this embodiment of this application, the communication apparatus 1400 may be the AF, the UPF, and/or the RAN, or may be an integrated circuit, an element, or the like inside the AF, the UPF, and/or the RAN, for example, a chip, or may be an integrated circuit, an element, or the like integrated inside the AF, the UPF, and/or the RAN.

In a possible example, the communication apparatus 1400 is used in an access network device, and the communication apparatus 1400 includes:
a transceiver module 1402, configured to receive first information, where the first information is used to enable the access network device to determine a retransmission mechanism of one or more protocol data unit sets PDU SET; and
a processing module 1401, configured to disable retransmission of a part or all of data packets of a first PDU set based on the first information, where the first PDU set belongs to the one or more PDU sets.

Optionally, the first information further indicates to enable an error correction mode for a part or all of data packets of the one or more PDU sets.

Optionally, the first information includes first indication information, where
the first indication information is used to enable the access network device to determine that the retransmission mechanism of the one or more PDU sets is: enabling the access network device to enable an unacknowledged mode UM related to the part or all of the data packets of the first PDU set.

Optionally, the first information includes first indication information, where
the first indication information is used to enable the access network device to determine that the retransmission mechanism of the one or more PDU sets is: enabling the access network device to disable retransmission of the part or all of the data packets of the one or more PDU sets.

Optionally, the first information includes a first parameter, and the first parameter indicates a maximum number of consecutive lost packets of a data packet of one PDU set; and
the first parameter indicates the access network device to determine that the retransmission mechanism of the one or more PDU sets is: enabling the access network device to determine, based on a maximum number of consecutive lost packets of the one or more PDU sets and the first parameter, to enable or disable retransmission of the part or all of the data packets of the one or more PDU sets.

Optionally,
a maximum number of consecutive lost packets of the first PDU set is less than or equal to the first parameter, and the access network device determines to disable retransmission of the part or all of the data packets of the first PDU set.

Optionally, the first information includes a second parameter, and the second parameter indicates a maximum number of lost packets or a maximum packet loss ratio of a data packet of one PDU set; and
the second parameter indicates that the retransmission mechanism of the one or more PDU sets is: enabling the access network device to determine, based on a maximum number of lost packets or a maximum packet loss ratio of the one or more PDU sets and the second parameter, to enable or disable retransmission of the part or all of the data packets of the one or more PDU sets.

Optionally,
a maximum number of lost packets or a maximum packet loss ratio of the first PDU set is less than or equal to the second parameter, and the access network device determines, based on the second parameter and the maximum number of lost packets or the maximum packet loss ratio of the first PDU set, to disable retransmission of the part or all of the data packets of the first PDU set.

Optionally,
the transceiver module 1402 is further configured to receive a status report of a terminal device, where the status report of the terminal device includes one or any combination of the following information: a first sequence number of a data packet sent by the access network device, indication information of an acknowledgment ACK of the data packet sent by the access network device, or indication information of a negative acknowledgment NACK of the data packet sent by the access network device;
the processing module 1401 is further configured to determine a transmission status of the first PDU set based on the status report of the terminal device, where the transmission status of the first PDU set includes an acknowledgment ACK result of a data packet of the first PDU set and/or a negative acknowledgment NACK result of a data packet of the first PDU set; and
the processing module 1401 is further configured to determine, based on the transmission status of the first PDU set, one or any combination of the following information: the maximum number of consecutive lost packets of the first PDU set, the maximum number of lost packets of the first PDU set, or the maximum packet loss ratio of the first PDU set.

Optionally,
the transceiver module 1402 is further configured to obtain, by a packet data convergence protocol PDCP layer of the access network device, the transmission status of the first PDU set; and
the processing module 1401 is further configured to determine, by the PDCP layer of the access network device based on the transmission status of the first PDU set, one or any combination of the following information: the maximum number of consecutive lost packets of the first PDU set, the maximum number of lost packets of the first PDU set, or the maximum packet loss ratio of the first PDU set.

Optionally,
the transceiver module 1402 is further configured to obtain, by an RLC layer of the access network device, the transmission status of the first PDU set; and
the processing module 1401 is further configured to determine, by the RLC layer of the access network device based on the transmission status of the first PDU set, one or any combination of the following information: the maximum number of consecutive lost packets of the first PDU set, the maximum number of lost packets of the first PDU set, or the maximum packet loss ratio of the first PDU set.

Optionally,
the transceiver module 1402 is further configured to obtain, by the PDCP layer of the access network device, the maximum number of consecutive lost packets of the first PDU set;
the transceiver module 1402 is further configured to receive, by the PDCP layer of the access network device, the first parameter from an RRC layer of the access network device; and
the processing module 1401 is further configured to determine, by the PDCP layer of the access network device based on the maximum number of consecutive lost packets of the first PDU set and the first parameter, to disable retransmission of the part or all of the data packets of the first PDU set.

Optionally,
the transceiver module 1402 is further configured to obtain, by the RLC layer of the access network device, the maximum number of consecutive lost packets of the first PDU set;
the transceiver module 1402 is further configured to obtain, by the RLC layer of the access network device, the first parameter; and
the processing module 1401 is further configured to determine, by the RLC layer of the access network device based on the maximum number of consecutive lost packets of the first PDU set and the first parameter, to disable retransmission of the part or all of the data packets of the first PDU set.

Optionally,
the transceiver module 1402 is further configured to obtain, by the RLC layer of the access network device, the first parameter from the part or all of the data packets of the first PDU set, where a header of the part or all of the data packets of the first PDU set carries the first parameter; or
the transceiver module 1402 is further configured to receive, by the RLC layer of the access network device, the first parameter from an RRC layer of the access network device.

Optionally,
the transceiver module 1402 is further configured to obtain, by the PDCP layer of the access network device, the maximum number of lost packets or the maximum packet loss ratio of the first PDU set;
the transceiver module 1402 is further configured to receive, by the PDCP layer of the access network device, the second parameter from an RRC layer of the access network device; and
the processing module 1401 is further configured to determine, by the PDCP layer of the access network device based on the maximum number of lost packets or the maximum packet loss ratio of the first PDU set and the second parameter, to disable retransmission of the part or all of the data packets of the first PDU set.

Optionally,
the transceiver module 1402 is further configured to obtain, by the RLC layer of the access network device, the maximum number of lost packets or the maximum packet loss ratio of the first PDU set;
the transceiver module 1402 is further configured to obtain, by the RLC layer of the access network device, the second parameter; and
the processing module 1401 is further configured to determine, by the RLC layer of the access network device based on the maximum number of lost packets or the maximum packet loss ratio of the first PDU set and the second parameter, to disable retransmission of the part or all of the data packets of the first PDU set.

Optionally,
the transceiver module 1402 is further configured to obtain, by the RLC layer of the access network device, the second parameter from the part or all of the data packets of the first PDU set, where a header of the part or all of the data packets of the first PDU set carries the second parameter; or
the transceiver module 1402 is further configured to receive, by the RLC layer of the access network device, the second parameter from an RRC layer of the access network device.

Optionally,
the processing module 1401 is further configured to determine, by the PDCP layer of the access network device, an ACK data packet of the first PDU set based on the status report of the terminal device, where the ACK data packet of the first PDU set indicates a data packet that is of the first PDU set and that is successfully received by the terminal device; and
the processing module 1401 is further configured to determine, by the PDCP layer of the access network device based on the ACK data packet of the first PDU set, to release or not to release the part or all of the data packets of the first PDU set in a buffer of the access network device.

Optionally,
the transceiver module 1402 is further configured to obtain, by the access network device, a transmission delay requirement of the terminal device; and
the transceiver module 1402 is further configured to: if the transmission delay requirement is less than a PSDB of the first PDU set, determine, based on the maximum number of consecutive lost packets of the first PDU set and the first parameter, to enable retransmission of the part or all of the data packets of the first PDU set; or
the transceiver module 1402 is further configured to: if the transmission delay requirement is greater than or equal to a PSDB of the first PDU set, determine, to disable retransmission of the part or all of the data packets of the first PDU set.

Optionally,
the transceiver module 1402 is further configured to receive the first information from an application function; or
the transceiver module 1402 is further configured to receive the first information from a user plane function, where the first information is carried in the part or all of the data packets of the one or more PDU sets from the user plane function.

Optionally,
the transceiver module 1402 is further configured to obtain, by the RLC layer of the access network, PDU set information PDU Set information of the first PDU set from a header of the part or all of the data packets of the first PDU set.

In another possible example, the communication apparatus 1400 is used in an application function, and the communication apparatus 1400 includes:
the transceiver module 1402 is further configured to send first information to an access network device, where the first information is used to enable the access network device to determine a retransmission mechanism of one or more protocol data unit sets PDU SET.

Optionally, the first information further indicates to enable an error correction mode for a part or all of data packets of the one or more PDU sets.

Optionally, the first information includes first indication information, where
the first indication information is used to enable the retransmission mechanism of the one or more PDU sets to be: enabling the access network device to enable an unacknowledged mode UM related to the part or all of the data packets of the one or more PDU sets.

Optionally, the first information includes first indication information, where
the first indication information is used to enable the retransmission mechanism of the one or more PDU sets to be: enabling the access network device to disable retransmission of the part or all of the data packets of the one or more PDU sets.

Optionally, the first indication information further indicates to disable automatic repeat request ARQ retransmission of the part or all of the data packets of the one or more PDU sets.

Optionally, the first information includes a first parameter, and the first parameter indicates a maximum number of consecutive lost packets of a data packet of one PDU set; and
the first parameter indicates the access network device to determine that the retransmission mechanism of the one or more PDU sets is: enabling the access network device to determine, based on a maximum number of consecutive lost packets of the one or more PDU sets and the first parameter, to enable or disable retransmission of the part or all of the data packets of the one or more PDU sets.

Optionally, that the first parameter indicates the access network device to determine the retransmission mechanism of the one or more PDU sets specifically includes:

The first parameter indicates the access network device to determine, based on the maximum number of consecutive lost packets of the one or more PDU sets, to enable or disable retransmission of the part or all of the data packets of the one or more PDU sets; and
when a maximum number of consecutive lost packets of a first PDU set is less than or equal to the first parameter, the access network device determines to disable retransmission of a part or all of data packets of the first PDU set; or
when a maximum number of consecutive lost packets of a first PDU set is greater than the first parameter, the access network device determines to enable retransmission of a part or all of data packets of the first PDU set, where the first PDU set belongs to the one or more PDU sets.

Optionally, the first parameter further indicates the access network device to enable an acknowledged mode AM of a data packet of the first PDU set, and the first PDU set belongs to the one or more PDU sets.

Optionally, the first information includes a second parameter, and the second parameter indicates a maximum number of lost packets or a maximum packet loss ratio of a data packet of one PDU set; and
the second parameter indicates the access network device to determine that the retransmission mechanism of the one or more PDU sets is: enabling the access network device to determine, based on a maximum number of lost packets or a maximum packet loss ratio of the one or more PDU sets and the second parameter, to enable or disable retransmission of the part or all of the data packets of the one or more PDU sets.

Optionally, the second parameter indicates the access network device to determine that the access network device determines, based on the maximum number of lost packets or the maximum packet loss ratio of the one or more PDU sets, to enable or disable retransmission of the part or all of the data packets of the one or more PDU sets; and
when a maximum number of lost packets or a maximum packet loss ratio of a first PDU set is less than or equal to the second parameter, the access network device determines to disable retransmission of a part or all of data packets of the first PDU set; or
when a maximum number of lost packets or a maximum packet loss ratio of the first PDU set is greater than the second parameter, the access network device determines to enable retransmission of a part or all of data packets of a first PDU set, where the first PDU set belongs to the one or more PDU sets.

Optionally, the second parameter further indicates the access network device to enable an acknowledged mode AM related to a data packet of the first PDU set, and the first PDU set belongs to the one or more PDU sets.

Optionally, the first information is carried in a QoS parameter of a first quality of service QoS flow, and the first QoS flow is used to transmit the one or more PDU sets.

Optionally, the error correction mode includes a forward error correction FEC mode.

Optionally, the second parameter is forward error correction content ratio FEC content ratio information.

In another possible example, the communication apparatus 1400 is used in a user plane function, and the communication apparatus 1400 includes:
the transceiver module 1402 is further configured to send first information to an access network device, where the first information is used to enable the access network device to determine a retransmission mechanism of one or more protocol data unit sets PDU SET.

Optionally, the first information is carried in a GTP-U packet header of a part or all of data packets of the one or more PDU sets.

Optionally, the first information further indicates to enable an error correction mode for a part or all of data packets of the one or more PDU sets.

Optionally, the first information includes first indication information, where
the first indication information is used to enable the access network device to determine that the retransmission mechanism of the one or more PDU sets is: enabling the access network device to enable an unacknowledged mode UM related to the part or all of the data packets of the one or more PDU sets.

Optionally, the first information includes first indication information, where
the first indication information is used to enable the access network device to determine that the retransmission mechanism of the one or more PDU sets is: enabling the access network device to disable retransmission of the part or all of the data packets of the one or more PDU sets.

Optionally, the first indication information further indicates to disable automatic repeat request ARQ retransmission of the part or all of the data packets of the one or more PDU sets.

Optionally, the first information includes a first parameter, and the first parameter indicates a maximum number of consecutive lost packets of a data packet of one PDU set; and
the first parameter indicates the access network device to determine that the retransmission mechanism of the one or more PDU sets is: enabling the access network device to determine, based on a maximum number of consecutive lost packets of the one or more PDU sets and the first parameter, to enable or disable retransmission of the part or all of the data packets of the one or more PDU sets.

Optionally, that the first parameter indicates the access network device to determine the retransmission mechanism of the one or more PDU sets specifically includes:

The first parameter indicates the access network device to determine, based on the maximum number of consecutive lost packets of the one or more PDU sets, to enable or disable retransmission of the part or all of the data packets of the one or more PDU sets; and
when a maximum number of consecutive lost packets of a first PDU set is less than or equal to the first parameter, the access network device determines to disable retransmission of a part or all of data packets of the first PDU set; or
when a maximum number of consecutive lost packets of a first PDU set is greater than the first parameter, the access network device determines to enable retransmission of a part or all of data packets of the first PDU set, where the first PDU set belongs to the one or more PDU sets.

Optionally, the first parameter further indicates the access network device to enable an acknowledged mode AM of a data packet of the first PDU set, and the first PDU set belongs to the one or more PDU sets.

Optionally, the first information includes a second parameter, and the second parameter indicates a maximum number of lost packets or a maximum packet loss ratio of a data packet of one PDU set; and
the second parameter indicates the access network device to determine that the retransmission mechanism of the one or more PDU sets is: enabling the access network device to determine, based on a maximum number of lost packets or a maximum packet loss ratio of the one or more PDU sets and the second parameter, to enable or disable retransmission of the part or all of the data packets of the one or more PDU sets.

Optionally, the second parameter indicates the access network device to determine, based on the maximum number of lost packets or the maximum packet loss ratio of the one or more PDU sets, to enable or disable retransmission of the part or all of the data packets of the one or more PDU sets; and
when a maximum number of lost packets or a maximum packet loss ratio of a first PDU set is less than or equal to the second parameter, the access network device determines to disable retransmission of a part or all of data packets of the first PDU set; or
when a maximum number of lost packets or a maximum packet loss ratio of the first PDU set is greater than the second parameter, the access network device determines to enable retransmission of a part or all of data packets of a first PDU set, where the first PDU set belongs to the one or more PDU sets.

Optionally, the second parameter further indicates the access network device to enable an acknowledged mode AM related to a data packet of the first PDU set, and the first PDU set belongs to the one or more PDU sets.

Optionally, the first information is carried in a QoS parameter of a first quality of service QoS flow, and the first QoS flow is used to transmit the one or more PDU sets.

Optionally, the error correction mode includes a forward error correction FEC mode.

Optionally, the second parameter is forward error correction content ratio FEC content ratio information.

FIG. 15 is a diagram of another structure of a communication apparatus 1500 according to this application. The communication apparatus 1500 includes at least an input/output interface 1502. The communication apparatus 1500 may be a chip or an integrated circuit.

Optionally, the communication apparatus further includes a logic circuit 1501.

The transceiver module 1402 shown in FIG. 14 may be a communication interface. The communication interface may be the input/output interface 1502 in FIG. 15. The input/output interface 1502 may include an input interface and an output interface. Alternatively, the communication interface may be a transceiver circuit, and the transceiver circuit may include an input interface circuit and an output interface circuit.

Optionally, when the communication apparatus 1500 is the AF, the UPF, and/or the RAN in the foregoing embodiments, the input/output interface 1502 is configured to input and output information, and the logic circuit 1501 is configured to perform the method performed by the AF, the UPF, and/or the RAN in the foregoing embodiments.

The logic circuit 1501 and the input/output interface 1502 may further perform other steps performed by the communication apparatus in any embodiment and implement corresponding beneficial effects. Details are not described herein again.

In a possible implementation, the processing module 1401 shown in FIG. 14 may be the logic circuit 1501 in FIG. 15.

Optionally, the logic circuit 1501 may be a processing apparatus, and some or all functions of the processing apparatus may be implemented by using software. Some or all functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. The memory configured to store the computer program is located outside the processing apparatus. The processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate array, FPGA), application-specific integrated circuits (application-specific integrated circuit, ASIC), system on chips (system on chip, SoC), central processing units (central processing unit, CPU), network processors (network processor, NP), digital signal processors (digital signal processor, DSP), micro controller units (micro controller unit, MCU), programmable logic devices (programmable logic device, PLD), other integrated chips, any combination of the foregoing chips or processors.

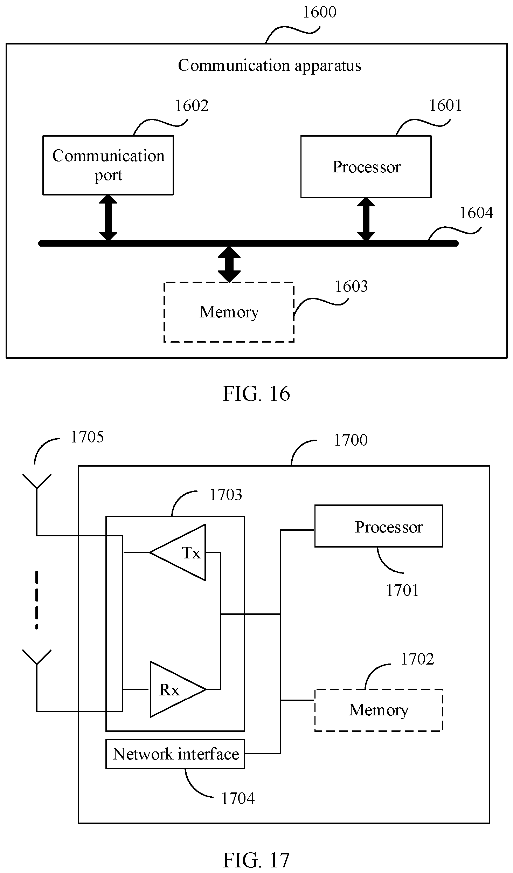

FIG. 16 shows a communication apparatus 1600 in the foregoing embodiments according to an embodiment of this application. The communication apparatus 1600 may be specifically the communication apparatus used as the AF, the UPF, and/or the RAN in the foregoing embodiments.

In the diagram of a possible logical structure of the communication apparatus 1600, the communication apparatus 1600 may include but is not limited to at least one processor 1601 and a communication port 1602.

Further, optionally, the apparatus may further include at least one of a memory 1603 and a bus 1604. In this embodiment of this application, the at least one processor 1601 is configured to control an action of the communication apparatus 1600.

In addition, the processor 1601 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. The processor may alternatively be a combination for implementing a computing function, for example, a combination including one or more microprocessors or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the communication apparatus 1600 shown in FIG. 16 may be specifically configured to: implement the steps implemented by the AF, the UPF, and/or the RAN in the foregoing method embodiments, and implement technical effects corresponding to the AF, the UPF, and/or the RAN. For a specific implementation of the communication apparatus shown in FIG. 16, refer to descriptions in the foregoing method embodiments. Details are not described herein again.

FIG. 17 is a diagram of a structure of a communication apparatus 1700 in the foregoing embodiments according to an embodiment of this application. The communication apparatus 1700 may be specifically the communication apparatus used as the AF, the UPF, and/or the RAN in the foregoing embodiments. For the structure of the communication apparatus, refer to the structure shown in FIG. 17.

The communication apparatus 1700 includes at least one processor 1701 and at least one network interface 1704. Further, optionally, the communication apparatus further includes at least one memory 1702, at least one transceiver 1703, and one or more antennas 1705. The processor 1701, the memory 1702, the transceiver 1703, and the network interface 1704 are connected, for example, through a bus. In this embodiment of this application, the connection may include various interfaces, transmission lines, buses, or the like. This is not limited in this embodiment. The antenna 1705 is connected to the transceiver 1703. The network interface 1704 is configured to enable the communication apparatus to communicate with another communication device through a communication link. For example, the network interface 1704 may include a network interface between the communication apparatus and a core network device, for example, an S1 interface. The network interface may include a network interface between the communication apparatus and another communication apparatus (for example, another radio access network or a core network device), for example, an X2 or Xn interface.

The processor 1701 is mainly configured to: process a communication protocol and communication data, control the entire communication apparatus, execute a software program, and process data of the software program, for example, configured to support the communication apparatus in performing the actions described in embodiments. The communication apparatus may include a baseband processor and a central processing unit. The baseband processor is mainly configured to process the communication protocol and the communication data. The central processing unit is mainly configured to: control an entire terminal device, execute the software program, and process the data of the software program. Functions of the baseband processor and the central processing unit may be integrated into the processor 1701 in FIG. 17. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, and the terminal device may include a plurality of central processing units, to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. The function of processing the communication protocol and the communication data may be built in the processor, or may be stored in the memory in a form of a software program, and the processor executes the software program, to implement a baseband processing function.

The memory is mainly configured to store the software program and data. The memory 1702 may exist independently, and is connected to the processor 1701. Optionally, the memory 1702 and the processor 1701 may be integrated together, for example, integrated into one chip. The memory 1702 can store program code for executing the technical solutions in embodiments of this application, and the processor 1701 controls execution of the program code. Various types of executed computer program code may also be considered as drivers of the processor 1701.

FIG. 17 shows only one memory and one processor. In an actual terminal device, there may be a plurality of processors and a plurality of memories. The memory may also be referred to as a storage medium, a storage device, or the like. The memory may be a storage element located on a same chip as the processor, namely, an on-chip storage element, or may be an independent storage element. This is not limited in this embodiment of this application.

The transceiver 1703 may be configured to support receiving or sending of a radio frequency signal between the communication apparatus and a terminal, and the transceiver 1703 may be connected to the antenna 1705. The transceiver 1703 includes a transmitter Tx and a receiver Rx. Specifically, the one or more antennas 1705 may receive a radio frequency signal. The receiver Rx of the transceiver 1703 is configured to: receive the radio frequency signal from the antenna, convert the radio frequency signal into a digital baseband signal or a digital intermediate frequency signal, and provide the digital baseband signal or the digital intermediate frequency signal for the processor 1701, so that the processor 1701 performs further processing, for example, demodulation processing and decoding processing, on the digital baseband signal or the digital intermediate frequency signal. In addition, the transmitter Tx in the transceiver 1703 is further configured to: receive a modulated digital baseband signal or digital intermediate frequency signal from the processor 1701, convert the modulated digital baseband signal or digital intermediate frequency signal into a radio frequency signal, and send the radio frequency signal through the one or more antennas 1705. Specifically, the receiver Rx may selectively perform one-level or multi-level down mixing processing and analog-to-digital conversion processing on the radio frequency signal, to obtain the digital baseband signal or the digital intermediate frequency signal. A sequence of the down mixing processing and the analog-to-digital conversion processing may be adjusted. The transmitter Tx may selectively perform one-level or multi-level up mixing processing and digital-to-analog conversion processing on the modulated digital baseband signal or digital intermediate frequency signal, to obtain the radio frequency signal. A sequence of the up mixing processing and the digital-to-analog conversion processing may be adjusted. The digital baseband signal and the digital intermediate frequency signal may be collectively referred to as a digital signal.

The transceiver 1703 may also be referred to as a transceiver module, a transceiver machine, a transceiver apparatus, or the like. Optionally, a component configured to implement a receiving function in the transceiver module may be considered as a receiving unit, and a component configured to implement a sending function in the transceiver module may be considered as a sending unit. In other words, the transceiver module includes the receiving unit and the sending unit. The receiving unit may also be referred to as a receiver, an input port, a receive circuit, or the like. The sending unit may be referred to as a transmitter, a transmitter machine, a transmit circuit, or the like.

It should be noted that the communication apparatus 1700 shown in FIG. 17 may be specifically configured to: implement the steps implemented by the AF, the UPF, and/or the RAN in the foregoing method embodiments, and implement technical effects corresponding to the AF, the UPF, and/or the RAN. For a specific implementation of the communication apparatus 1700 shown in FIG. 17, refer to descriptions in the foregoing method embodiments. Details are not described herein again.

An embodiment of this application further provides a computer-readable storage medium storing one or more computer-executable instructions. When the computer-executable instructions are executed by a processor, the processor performs the method according to the possible implementations of the AF, the UPF, or the RAN in the foregoing embodiments.

An embodiment of this application further provides a computer program product (or referred to as a computer program) storing one or more computers. When the computer program product is executed by the processor, the processor performs the method in the possible implementations of the AF, the UPF, or the RAN.

An embodiment of this application further provides a chip system. The chip system includes at least one processor configured to support a communication apparatus to implement the functions in the foregoing possible implementations of the communication apparatus. Optionally, the chip system further includes an interface circuit. The interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may specifically be the AF, the UPF, or the RAN in the foregoing method embodiments.

An embodiment of this application further provides a communication system. The communication system includes the AF, the UPF, or the RAN in any foregoing embodiment.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components displayed as units may or may not be physical units, that is, may be located at one position, or may be distributed on a plurality of network units. A part or all of the units may be selected as required to achieve the objectives of the solutions of embodiments.

In addition, functional units in embodiments of this application may be integrated into one processing module, each of the units may exist independently physically, or two or more units may be integrated into one unit. The integrated unit may be implemented in a form of hardware, or may be implemented in a form of software functional unit. When the integrated unit is implemented in the form of software functional unit and sold or used as an independent product, the integrated unit may be stored in a computer-readable storage medium. Based on such an understanding, the technical solutions of this application essentially, or a part making contributions, or all or some of the technical solutions may be implemented in a form of software product. A computer software product is stored in a storage medium and includes several instructions for instructing a computer device (which may be a personal computer, a server, a radio access network, or the like) to perform all or some of the steps of the methods in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A protocol data unit set-based communication method, comprising:
receiving, by an access network device, first information, wherein the first information is used to enable the access network device to determine a retransmission mechanism of one or more protocol data unit sets PDU SET; and
disabling, by the access network device, retransmission of a part or all of data packets of a first PDU set based on the first information, wherein the first PDU set belongs to the one or more PDU sets.

2. The method according to claim 1, wherein the first information is further used to enable an error correction mode for a part or all of data packets of the one or more PDU sets.

3. The method according to claim 1 or 2, wherein the first information comprises: first indication information, wherein
the first indication information is used to enable the access network device to determine that the retransmission mechanism of the one or more PDU sets is: enabling the access network device to enable an unacknowledged mode UM related to the part or all of the data packets of the first PDU set.

4. The method according to any one of claims 1 to 3, wherein the first information comprises: the first indication information, wherein
the first indication information is used to enable the access network device to determine that the retransmission mechanism of the one or more PDU sets is: enabling the access network device to disable retransmission of the part or all of the data packets of the one or more PDU sets.

5. The method according to any one of claims 1 to 4, wherein the first information comprises a first parameter, and the first parameter indicates a maximum number of consecutive lost packets of a data packet of one PDU set; and
the first parameter is used to enable the access network device to determine that the retransmission mechanism of the one or more PDU sets is: enabling the access network device to determine, based on a maximum number of consecutive lost packets of the one or more PDU sets and the first parameter, to enable or disable retransmission of the part or all of the data packets of the one or more PDU sets.

6. The method according to claim 5, wherein disabling, by the access network device, retransmission of the part or all of the data packets of the first PDU set based on the first information comprises:
a maximum number of consecutive lost packets of the first PDU set is less than or equal to the first parameter, and the access network device determines to disable retransmission of the part or all of the data packets of the first PDU set.

7. The method according to any one of claims 1 to 6, wherein the first information comprises a second parameter, and the second parameter indicates a maximum number of lost packets or a maximum packet loss ratio of a data packet of one PDU set; and
the second parameter indicates that the retransmission mechanism of the one or more PDU sets is: enabling the access network device to determine, based on a maximum number of lost packets or a maximum packet loss ratio of the one or more PDU sets and the second parameter, to enable or disable retransmission of the part or all of the data packets of the one or more PDU sets.

8. The method according to claim 7, wherein determining, by the access network device, to disable retransmission of the part or all of the data packets of the first PDU set based on the first information comprises:
a maximum number of lost packets or a maximum packet loss ratio of the first PDU set is less than or equal to the second parameter, and the access network device determines, based on the second parameter and the maximum number of lost packets or the maximum packet loss ratio of the first PDU set, to disable retransmission of the part or all of the data packets of the first PDU set.

9. The method according to any one of claims 1 to 8, wherein the method further comprises:
receiving, by the access network device, a status report of the terminal device, wherein the status report of the terminal device comprises one or any combination of the following information: a first sequence number of a data packet sent by the access network device, indication information of an acknowledgment ACK of the data packet sent by the access network device, or indication information of a negative acknowledgment NACK of the data packet sent by the access network device;
determining, by the access network device, a transmission status of the first PDU set based on the status report of the terminal device, wherein the transmission status of the first PDU set comprises an acknowledgment ACK result of a data packet of the first PDU set and/or a negative acknowledgment NACK result of a data packet of the first PDU set; and
determining, by the access network device based on the transmission status of the first PDU set, one or any combination of the following information: the maximum number of consecutive lost packets of the first PDU set, the maximum number of lost packets of the first PDU set, or the maximum packet loss ratio of the first PDU set.

10. The method according to claim 9, wherein determining, by the access network device based on the transmission status of the first PDU set, one or any combination of the following information: the maximum number of consecutive lost packets of the first PDU set, the maximum number of lost packets of the first PDU set, or the maximum packet loss ratio of the first PDU set comprises:
obtaining, by a packet data convergence protocol PDCP layer of the access network device, the transmission status of the first PDU set; and
determining, by the PDCP layer of the access network device based on the transmission status of the first PDU set, one or any combination of the following information: the maximum number of consecutive lost packets of the first PDU set, the maximum number of lost packets of the first PDU set, or the maximum packet loss ratio of the first PDU set.

11. The method according to claim 9, wherein determining, by the access network device based on the transmission status of the first PDU set, one or any combination of the following information: the maximum number of consecutive lost packets of the first PDU set, the maximum number of lost packets of the first PDU set, or the maximum packet loss ratio of the first PDU set comprises:
obtaining, by an RLC layer of the access network device, the transmission status of the first PDU set; and
determining, by the RLC layer of the access network device based on the transmission status of the first PDU set, one or any combination of the following information: the maximum number of consecutive lost packets of the first PDU set, the maximum number of lost packets of the first PDU set, or the maximum packet loss ratio of the first PDU set.

12. The method according to claim 10 or 11, wherein determining, by the access network device, to disable retransmission of the part or all of the data packets of the first PDU set comprises:
obtaining, by the PDCP layer of the access network device, the maximum number of consecutive lost packets of the first PDU set;
receiving, by the PDCP layer of the access network device, the first parameter from an RRC layer of the access network device; and
determining, by the PDCP layer of the access network device based on the maximum number of consecutive lost packets of the first PDU set and the first parameter, to disable retransmission of the part or all of the data packets of the first PDU set.

13. The method according to claim 10 or 11, wherein determining, by the access network device, to disable retransmission of the part or all of the data packets of the first PDU set comprises:
obtaining, by the RLC layer of the access network device, the maximum number of consecutive lost packets of the first PDU set;
obtaining, by the RLC layer of the access network device, the first parameter; and
determining, by the RLC layer of the access network device based on the maximum number of consecutive lost packets of the first PDU set and the first parameter, to disable retransmission of the part or all of the data packets of the first PDU set.

14. The method according to claim 13, wherein obtaining, by the RLC layer of the access network device, the first parameter comprises:
obtaining, by the RLC layer of the access network device, the first parameter from the part or all of the data packets of the first PDU set, wherein a header of the part or all of the data packets of the first PDU set carries the first parameter; or
receiving, by the RLC layer of the access network device, the first parameter from an RRC layer of the access network device.

15. The method according to claim 10 or 11, wherein determining, by the access network device, to disable retransmission of the part or all of the data packets of the first PDU set comprises:
obtaining, by the PDCP layer of the access network device, the maximum number of lost packets or the maximum packet loss ratio of the first PDU set;
receiving, by the PDCP layer of the access network device, the second parameter from an RRC layer of the access network device; and
determining, by the PDCP layer of the access network device based on the maximum number of lost packets or the maximum packet loss ratio of the first PDU set and the second parameter, to disable retransmission of the part or all of the data packets of the first PDU set.

16. The method according to claim 10 or 11, wherein determining, by the access network device, to disable a retransmission mechanism of the part or all of the data packets of the first PDU set comprises:
obtaining, by the RLC layer of the access network device, the maximum number of lost packets or the maximum packet loss ratio of the first PDU set;
obtaining, by the RLC layer of the access network device, the second parameter; and
determining, by the RLC layer of the access network device based on the maximum number of lost packets or the maximum packet loss ratio of the first PDU set and the second parameter, to disable retransmission of the part or all of the data packets of the first PDU set.

17. The method according to claim 16, wherein obtaining, by the RLC layer of the access network device, the second parameter comprises:
obtaining, by the RLC layer of the access network device, the second parameter from the part or all of the data packets of the first PDU set, wherein a header of the part or all of the data packets of the first PDU set carries the second parameter; or
receiving, by the RLC layer of the access network device, the second parameter from an RRC layer of the access network device.

18. The method according to any one of claims 9 to 17, wherein the method further comprises:
determining, by the PDCP layer of the access network device, an ACK data packet of the first PDU set based on the status report of the terminal device, wherein the ACK data packet of the first PDU set indicates a data packet that is of the first PDU set and that is successfully received by the terminal device; and
determining, by the PDCP layer of the access network device based on the ACK data packet of the first PDU set, to release or not to release the part or all of the data packets of the first PDU set in a buffer of the access network device.

19. The method according to any one of claims 5 to 18, wherein the method further comprises:
obtaining, by the access network device, a transmission delay requirement of the terminal device; and
if the transmission delay requirement is less than a PSDB of the first PDU set, determining, by the access network device based on the maximum number of consecutive lost packets of the first PDU set and the first parameter, to enable retransmission of the part or all of the data packets of the first PDU set; or
if the transmission delay requirement is greater than or equal to a PSDB of the first PDU set, determining, by the access network device, to disable retransmission of the part or all of the data packets of the first PDU set.

20. The method according to any one of claims 1 to 19, wherein receiving, by the access network device, the first information comprises:
receiving, by the access network device, the first information from an application function; or
receiving, by the access network device, the first information from a user plane function, wherein the first information is carried in the part or all of the data packets of the one or more PDU sets from the user plane function.

21. The method according to claim 14 or 17, wherein
the RLC layer of the access network obtains PDU set information PDU Set information of the first PDU set from the header of the part or all of the data packets of the first PDU set.

22. A protocol data unit set-based communication method, comprising:
sending, by an application function, first information to an access network device, wherein the first information is used to enable the access network device to determine a retransmission mechanism of one or more protocol data unit sets PDU SET.

23. The method according to claim 22, wherein the first information further indicates to enable an error correction mode for a part or all of data packets of the one or more PDU sets.

24. The method according to claim 22 or 23, wherein the first information comprises: first indication information, wherein
the first indication information is used to enable the access network device to determine that the retransmission mechanism of the one or more PDU sets is: enabling the access network device to enable an unacknowledged mode UM related to the part or all of the data packets of the one or more PDU sets.

25. The method according to any one of claims 22 to 24, wherein the first information comprises: the first indication information, wherein
the first indication information is used to enable the access network device to determine that the retransmission mechanism of the one or more PDU sets is: enabling the access network device to disable retransmission of the part or all of the data packets of the one or more PDU sets.

26. The method according to any one of claims 22 to 25, wherein the first information comprises a first parameter, and the first parameter indicates a maximum number of consecutive lost packets of a data packet of one PDU set; and
the first parameter indicates the access network device to determine that the retransmission mechanism of the one or more PDU sets is: enabling the access network device to determine, based on a maximum number of consecutive lost packets of the one or more PDU sets and the first parameter, to enable or disable retransmission of the part or all of the data packets of the one or more PDU sets.

27. The method according to any one of claims 22 to 26, wherein the first information comprises a second parameter, and the second parameter indicates a maximum number of lost packets or a maximum packet loss ratio of a data packet of one PDU set; and
the second parameter indicates the access network device to determine that the retransmission mechanism of the one or more PDU sets is: enabling the access network device to determine, based on a maximum number of lost packets or a maximum packet loss ratio of the one or more PDU sets and the second parameter, to enable or disable retransmission of the part or all of the data packets of the one or more PDU sets.

28. The method according to any one of claims 22 to 27, wherein the first information is carried in a QoS parameter of a first quality of service QoS flow, and the first QoS flow is used to transmit the one or more PDU sets.

29. The method according to any one of claims 23 to 28, wherein the error correction mode comprises a forward error correction FEC mode.

30. A protocol data unit set-based communication method, comprising:
sending, by a user plane function, first information to an access network device, wherein the first information is used to enable the access network device to determine a retransmission mechanism of one or more protocol data unit sets PDU SET.

31. The method according to claim 30, wherein the first information is carried in a GTP-U packet header of a part or all of data packets of the one or more PDU sets.

32. The method according to claim 30 or 31, wherein the first information further indicates to enable an error correction mode for the part or all of the data packets of the one or more PDU sets.

33. The method according to any one of claims 30 to 32, wherein the first information comprises: first indication information, wherein
the first indication information is used to enable the access network device to determine that the retransmission mechanism of the one or more PDU sets is: enabling the access network device to enable an unacknowledged mode UM related to the part or all of the data packets of the one or more PDU sets.

34. The method according to any one of claims 30 to 33, wherein the first information comprises: the first indication information, wherein
the first indication information is used to enable the access network device to determine that the retransmission mechanism of the one or more PDU sets is: enabling the access network device to disable retransmission of the part or all of the data packets of the one or more PDU sets.

35. The method according to any one of claims 30 to 34, wherein the first information comprises a first parameter, and the first parameter indicates a maximum number of consecutive lost packets of a data packet of one PDU set; and
the first parameter indicates the access network device to determine that the retransmission mechanism of the one or more PDU sets is: enabling the access network device to determine, based on a maximum number of consecutive lost packets of the one or more PDU sets and the first parameter, to enable or disable retransmission of the part or all of the data packets of the one or more PDU sets.

36. The method according to any one of claims 30 to 35, wherein the first information comprises a second parameter, and the second parameter indicates a maximum number of lost packets or a maximum packet loss ratio of a data packet of one PDU set; and
the second parameter indicates the access network device to determine that the retransmission mechanism of the one or more PDU sets is: enabling the access network device to determine, based on a maximum number of lost packets or a maximum packet loss ratio of the one or more PDU sets and the second parameter, to enable or disable retransmission of the part or all of the data packets of the one or more PDU sets.

37. The method according to any one of claims 30 to 36, wherein the error correction mode comprises a forward error correction FEC mode.

38. A communication apparatus, comprising a transceiver module and a processing module, wherein
the transceiver module is configured to: input and/or output signaling or data; and
the processing module is configured to: perform, through a communication unit, the method according to any one of claims 1 to 21, the method according to any one of claims 22 to 29, or the method according to any one of claims 30 to 37.

39. A communication apparatus, comprising a communication interface and a processor, wherein
the communication interface is configured to: input and/or output signaling or data; and
the processor is configured to execute a computer-executable program, so that the method according to any one of claims 1 to 21 is performed, the method according to any one of claims 22 to 29 is performed, or the method according to any one of claims 30 to 37 is performed.

40. A communication apparatus, comprising a processor and a memory, wherein
the memory is configured to store a computer program or instructions; and
the processor is configured to execute the computer program or the instructions in the memory, so that the method according to any one of claims 1 to 21 is performed, the method according to any one of claims 22 to 29 is performed, or the method according to any one of claims 30 to 37 is performed.

41. A computer-readable storage medium, comprising instructions, wherein when the instructions are executed by a processor, the method according to any one of claims 1 to 21, claims 22 to 29, or claims 30 to 37 is implemented.

42. A computer program product, comprising a program, wherein when the program is executed by a processor, the method according to any one of claims 1 to 21, claims 22 to 29, or claims 30 to 37 is implemented.

43. A chip system, wherein the chip system comprises at least one processor, and when program instructions are executed by the at least one processor, the method according to any one of claims 1 to 21, claims 22 to 29, or claims 30 to 37 is implemented.

44. A communication system, comprising a communication apparatus configured to perform the method according to any one of claims 1 to 21, a communication apparatus configured to perform the method according to any one of claims 22 to 29, and a communication apparatus configured to perform the method according to any one of claims 30 to 37.

45. A protocol data unit set-based communication method, wherein the method is applied to a communication system, the communication system comprises an access network device and an application function, and the method comprises:
sending, by the user plane function, first information to the access network device, wherein the first information is used to enable the access network device to determine a retransmission mechanism of one or more protocol data unit sets PDU SET;
receiving, by the access network device, the first information; and
disabling, by the access network device, retransmission of a part or all of data packets of a first PDU set based on the first information, wherein the first PDU set belongs to the one or more PDU sets.

46. A protocol data unit set-based communication method, wherein the method is applied to a communication system, the communication system comprises an access network device and a user plane function, and the method comprises:
sending, by the user plane function, first information to the access network device, wherein the first information is used to enable the access network device to determine a retransmission mechanism of one or more protocol data unit sets PDU SET;
receiving, by the access network device, the first information; and
disabling, by the access network device, retransmission of a part or all of data packets of a first PDU set based on the first information, wherein the first PDU set belongs to the one or more PDU sets.
